(19) Europäisches Patentamt / European Patent Office / Office européen des brevets

(11) **EP 4 700 163 A1**

(12) **EUROPEAN PATENT APPLICATION**
published in accordance with Art. 153(4) EPC

(43) Date of publication:
**25.02.2026 Bulletin 2026/09**

(21) Application number: 23933919.5

(22) Date of filing: **29.12.2023**

(51) International Patent Classification (IPC):
*D01F 9/22* (2006.01)      *D01F 6/38* (2006.01)
*D01D 1/02* (2006.01)      *D01D 5/06* (2006.01)
*C08F 220/44* (2006.01)

(52) Cooperative Patent Classification (CPC):
C08F 2/00; C08F 120/44; C08F 220/44; D01D 1/02;
D01D 5/06; D01F 6/38; D01F 9/22

(86) International application number:
**PCT/CN2023/142998**

(87) International publication number:
**WO 2024/217057 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.04.2023  CN 202310405833**

(71) Applicants:
• **China Petroleum & Chemical Corporation
Beijing 100728 (CN)**
• **Sinopec (Shangai) Research Institute of
Petrochemical Technology Co., Ltd.
Shanghai 201208 (CN)**

(72) Inventors:
• **SHEN, Zhigang
Shanghai 201208 (CN)**
• **ZHOU, Qinzhuo
Shanghai 201208 (CN)**
• **LI, Lei
Shanghai 201208 (CN)**
• **MIAO, Jingen
Shanghai 201208 (CN)**

(74) Representative: **karo IP
Patentanwälte PartG mbB
Steinstraße 16-18
40212 Düsseldorf (DE)**

(54) **POLYACRYLONITRILE-BASED CARBON FIBER, STOCK SOLUTION, AND PREPARATION METHODS THEREFOR**

(57)    The present invention relates to a polyacrylonitrile-based carbon fiber, a polyacrylonitrile solution and a preparation process thereof, which mainly solves the problem that the presence of gel particles in the polyacrylonitrile solution in the prior art causes poor mechanical properties of the carbon fiber. The present invention provides a polyacrylonitrile-based carbon fiber, wherein the micropore radial size $L_P$ is less than or equal to 2.0 nm and the micropore aspect ratio $L/L_P$ is greater than or equal to 50 and less than or equal to 100, and optionally the diameter Cv value is less than or equal to 3%. The present invention also provides a polyacrylonitrile spinning dope, wherein the total number of gel particles with a particle size greater than 0.15 $\mu$m is less than or equal to $1\times10^5$ particles/mL, and the proportion of gel particles with a particle size greater than 5 $\mu$m to the total gel particles is less than or equal to 0.3%; wherein the equilibrium swelling degree of the gel particles is 250~5000%. The present invention also provides a preparation process of a polyacrylonitrile solution and a preparation process of a polyacrylonitrile-based carbon fiber.

## Description

Technical Field

The invention relates to a polyacrylonitrile-based carbon fiber, a dope, and a preparation process thereof.

Background Art

Polyacrylonitrile-based carbon fiber has excellent properties such as high specific strength and high specific modulus. Composite materials that use polyacrylonitrile-based carbon fiber as reinforcing fiber have been widely used in aerospace, new energy, and other fields. With the expansion of carbon fiber application fields, the requirements for the performance of polyacrylonitrile-based carbon fiber are further improved.

The nascent fiber is the basis of the structure of polyacrylonitrile fiber (precursor fiber). Polyacrylonitrile fiber is prepared by coagulating and molding a spinning stream to obtain a nascent fiber and then applying the post-processing processes and other processes to the nascent fiber. More specifically, the nascent fiber is obtained by slowly forming a fiber morphology in a coagulation bath by a spinning stream. The fiber molding process of the spinning stream in the coagulation bath directly determines the structure of the nascent fiber. Therefore, the coagulation molding state of the nascent fiber plays a decisive role in the performance of the polyacrylonitrile-based precursor fiber and the performance of the carbon fiber. Whether it is a wet spinning process or a dry-jet wet spinning process for polyacrylonitrile-based precursor fiber, the coagulation molding of the dope after it is extruded from the spinning hole is particularly important, in which the smooth extrusion of the dope is related to the stability of the extrusion coagulation process, the quality of the nascent fiber, the replacement cycle of the spinneret, etc.

The biggest factor affecting the quality of polyacrylonitrile-based carbon fiber is the quality of the precursor fiber, in which the defects of the precursor fiber will be inherited to the carbon fiber, and even amplified in the pre-oxidation and carbonization stages. The first condition for producing high-quality polyacrylonitrile precursor fiber is to prepare a high-quality polyacrylonitrile solution. For high-quality polyacrylonitrile solution, in addition to being long-term stable in molecular weight characteristics, solid content, viscosity, and copolymer composition, the solution also includes a sufficiently low impurity content. Impurities in polyacrylonitrile solution usually include mechanical impurities introduced from the external environment, non-solvent impurities, and gel particles generated during the operation of the equipment. The above impurities have a negative impact on the filtration and dope extrusion procedures of polyacrylonitrile solution. In severe cases, it will cause the spinneret to be blocked, causing a series of spinning abnormalities such as nascent fiber filament fuzziness and breakage, until it has to be stopped for cleaning, which seriously affects production efficiency and precursor fiber quality. Furthermore, when impurities such as gel particles in the polyacrylonitrile solution penetrate the filter and enter the spinning hole, the spinning hole extrusion is not smooth, and the nascent fiber is thinned after multi-stage drawing, resulting in reduced mechanical properties of polyacrylonitrile-based precursor fiber and carbon fiber, and a high discrete coefficient. In addition, the drawability of the microgel particles that enter the precursor fiber is quite different from that of the fiber body. After the nascent fiber is dried, densified, and drawn in multiple stages, the microgel particles are retained as defects inside the fiber, degrading the microscopic orientation structure and mechanical properties of the polyacrylonitrile precursor fiber. Furthermore, for the gel particles inside the precursor fiber, compared with the polyacrylonitrile fiber body, the gel particles with low swelling degree and difficult to draw are more likely to release heat and collapse during the thermal stabilization process, thereby producing micropores with larger radial defects, further degrading the performance of polyacrylonitrile-based carbon fibers. Therefore, the preparation of high-quality polyacrylonitrile solution is particularly important for improving the performance and uniformity of polyacrylonitrile-based precursor fibers and carbon fibers.

JP2017128838A, JP2018141251A, WO2019012999A1, JP2019112730A, and CN110832127A disclose that a spinning solution is prepared by dissolving a polyacrylonitrile copolymer (Mz/Mw is 1.5-6.0) in a solvent, filtering the spinning solution under certain conditions of filtration rate, filtration accuracy ($\geq 3\mu m$) and filter material thickness, spinning the filtered spinning solution to obtain a carbon precursor fiber bundle, and oxidizing and carbonizing the carbon precursor fiber bundle to obtain a carbon fiber bundle with fewer defects on the fiber fracture surface.

JP2008248219A5 proposes polyacrylonitrile (PAN)-based polymer, wherein the content of components with a molecular weight of more than 3 million or higher molecular weight (10 million) measured by gel permeation chromatography (GPC) is 1-10%, and the polydispersity ($M_Z/M_W$) is 3.0-10.0; the polymer can increase the spinning speed and improve the spin-draw ratio; and it also provides a process for producing a carbon precursor fiber with a small amount of filament fuzziness and high quality without compromising productivity. However, it is worth noting that such a high weight average molecular weight will bring very high pressure to the precision filtration of the polyacrylonitrile solution, and put forward higher requirements on the pressure resistance and replacement cycle of the filter and the spinneret.

JP4924484B2 points out that when the weight average molecular weight of the polyacrylonitrile-based polymer is 300,000-500,000, the molecular weight distribution Mz/Mw is 2.5-10.0, the filtration rate per unit area or processing volume per unit area is 1-150L/m$^2$·h, and the filtration residence time V/W (V is the effective volume of the filter L, W is the polymer flow rate L/min) (min) is 0.01-10, if the filtration processing volume exceeds the limit or the filtration residence time is too long, the high molecular weight part of the polymer will be retained or the gel impurities will be squeezed out , causing the carbon fiber strength to be greatly reduced. JP5141598B2 points out that before spinning the spinning dope, the unit area weight A of the filtration guarantee layer , the material density B (where 0.01 ≤ A/B ×1000 ≤ 0.06), the filtration resistance coefficient $5 \times 10^5$ ~$30 \times 10^5$ cm$^{-1}$ , and the thickness of the filtration guarantee layer (0.033-0.25mm) meet certain conditions, which can not only accurately filter out foreign matter such as gel-like substances from the spinning dope before filtration, but also eliminate clogging of the filter medium.

CN1417393A proposes that the spinning dope is filtered through a filter material of 0.5 to 5 μm, preferably a filter material of 0.5 to 3 μm; the adoption of precision filtration measures effectively reduces the gel particles in the spinning dope; the number of particles larger than 0.2 μm in the spinning dope is reduced from 1000/L before filtration to 50/L after filtration; the strength of the fiber spun from the spinning dope is increased from 5.2 g/d to 7.5 g/d compared with the unfiltered spinning dope. It is worth noting that the application does not mention the test process for the number of gel particles. In addition, such a spinning dope with a low gel particle content must adopt extremely precise filtration measures or control extremely low filtration pressure difference to achieve, which will inevitably lead to a significant increase in production costs and a significant decrease in production efficiency.

The above literature is based on polyacrylonitrile molecular weight and solution filtration and constructs a reasonable operating range for filtration accuracy, filtration processing volume, filtration residence time and polyacrylonitrile molecular weight to meet the stable production of polyacrylonitrile-based carbon precursor fibers. However, high-precision filters are not only expensive but also have a short service life; in addition, the large filtration pressure drop places high demands on the pressure resistance level of the spinneret during the dope extrusion process.

In view of this, the present invention provides a polyacrylonitrile solution, which can overcome at least one problem existing in the prior art and meet the demand for long-term stable production. The polyacrylonitrile solution of the present invention can be spun to prepare polyacrylonitrile-based carbon precursor fiber; the precursor fiber can be pre-oxidized, carbonized and subjected to other processes to prepare polyacrylonitrile-based carbon fiber.

Summary of the Invention

The inventors found in in-depth research that polyacrylonitrile gel particles are almost unavoidable in the production process, and further found in more in-depth research that the characteristics of polyacrylonitrile gel particles are closely related to the temperature of its formation process, and are also related to the concentration of oxygen in the atmosphere of the polymerization process. The long-term residence of polyacrylonitrile solution in a medium-high temperature atmosphere containing oxygen will easily lead to the formation of gel particles. The chemical structure of the gel particles has undergone tremendous changes compared with polyacrylonitrile, in which a large number of crosslinks are generated between the polyacrylonitrile polymer chains under the dual promotion of oxygen and high temperature. When the molecular chain between the crosslinking points is shorter, the gel particles have a lower equilibrium swelling degree, higher rigidity, and poor tensile properties; during the fiber drawing process, the gel particles retain the gel particle morphology, resulting in an increase in internal defects in the fiber, and then a significant decrease in mechanical properties. On the contrary, gel particles with a high equilibrium swelling degree have longer molecular chains between their crosslinking points and exhibit better tensile properties. Even if the gel particles enter the fiber under a higher filtration pressure difference, gel particles with a high equilibrium swelling degree will follow the fiber body to undergo axial tensile deformation, thereby producing narrow and long micropores along the axial direction in the final carbon fiber. This can reduce the negative impact on the mechanical properties and make the carbon fiber have better mechanical properties.

In view of this, one of the objects of the present invention is to provide a polyacrylonitrile-based carbon fiber having narrow and long micropores along the axial direction.

The second object of the present invention is to provide a polyacrylonitrile spinning dope, which contains gel particles, and the gel particles have a high equilibrium swelling degree, for example, the equilibrium swelling degree of the gel particles is 250-5000%. The polyacrylonitrile spinning dope can be used to prepare the above-mentioned polyacrylonitrile-based carbon fiber.

The third object of the present invention is to provide a process for preparing polyacrylonitrile spinning dope, wherein the dope prepared by the process contains gel particles, and the gel particles have a high equilibrium swelling degree, for example, the equilibrium swelling degree of the gel particles is 250~5000%.

A fourth object of the present invention is to provide a process for preparing polyacrylonitrile-based carbon fibers, such as the above-mentioned polyacrylonitrile-based carbon fibers, wherein the carbon fibers prepared by the process have narrow and long micropores along the axial direction.

One aspect of the present invention relates to a polyacrylonitrile-based carbon fiber containing micropores, wherein the average radial size $L_P$ of the micropores is less than or equal to 2.0 nm, the aspect ratio $L/L_P$ of the micropores is greater than or equal to 50 and less than or equal to 100, and the ratio of the volume of micropores with a radial size greater than 15 nm to the total micropore volume is greater than 0 and less than 10%.

In some embodiments, the average radial size $L_P$ of the micropores is less than or equal to 1.5 nm, the aspect ratio $L/L_P$ of the micropores is greater than or equal to 60 and less than or equal to 100, and the ratio of the volume of micropores with radial sizes greater than 15 nm to the total micropore volume is greater than 0 and less than 5%.

In some embodiments, the carbon fibers have a diameter Cv value less than or equal to 3%.

In some embodiments, the number of fibers of the polyacrylonitrile-based carbon fiber is 3,000 to 24,000.

In some embodiments, the polyacrylonitrile-based carbon fiber has a diameter of 5-7 $\mu$m; a tensile strength of 4.9-5.8 GPa, and a tensile strength Cv value of less than 5%; and/or a tensile modulus of 282-323 GPa, and a tensile modulus Cv value of less than 5%.

Another aspect of the present invention relates to a polyacrylonitrile spinning dope, which contains gel particles, wherein the total number of gel particles with a particle size greater than 0.15 $\mu$m is less than or equal to $1 \times 10^5$ particles/mL, and the proportion of gel particles with a particle size greater than 5 $\mu$m to the total number of gel particles is less than or equal to 0.3%; wherein the equilibrium swelling degree of the gel particles is 250~5000%.

In some embodiments, the polyacrylonitrile spinning dope includes polyacrylonitrile polymer and solvent, and the weight ratio of the polyacrylonitrile to the solvent is (15~30): (85~70), preferably (18~22): (82~78).

In some embodiments, the solvent is at least one of dimethyl sulfoxide, dimethylformamide, dimethylacetamide, and mixtures thereof.

In some embodiments, the zero shear viscosity of the polyacrylonitrile spinning dope is 50-150 Pa·s, wherein the viscosity test temperature is 50°C.

In some embodiments, the polyacrylonitrile spinning dope is used to prepare the polyacrylonitrile-based carbon fiber of the present invention.

Another aspect of the present invention relates to a process for preparing a polyacrylonitrile spinning dope, which includes solution polymerization, wherein the solution polymerization adopts three-stage temperature control, wherein the temperature of the first initial initiation stage is $T_1$ °C, the temperature of the second constant temperature polymerization stage is $T_2$ °C, and the temperature of the third cooling polymerization stage is $T_3$ °C; wherein $T_1$, $T_2$, and $T_3$ satisfy the following relationship:

$$T_1 = (0.5 \sim 1.4)*T_2 \text{ and } 35 \leq T_1 \leq 80;$$

and

$$T_3 = T_2 - (5 \sim 50) \text{ and } 50 \geq T_3 \geq 25.$$

In some embodiments, the process for preparing the polyacrylonitrile spinning dope is used to prepare the polyacrylonitrile spinning dope of the present invention.

In some embodiments, $35°C \leq T_1 \leq 80°C$, preferably $40°C \leq T_1 \leq 70°C$; $40°C \leq T_2 \leq 90°C$, preferably $50°C \leq T_2 \leq 80°C$; and $25°C \leq T_3 \leq 50°C$, preferably $25°C \leq T_3 \leq 45°C$, more preferably $30°C \leq T_3 \leq 45°C$.

In some embodiments, $50°C \leq T_2 \leq 80°C$, $40°C \leq T_1 \leq 70°C$, and $30°C \leq T_3 \leq 45°C$.

In some embodiments, $T_3 = T_2 - (15 \sim 50)$, preferably $T_3 = T_2 - (15 \sim 40)$, more preferably $T_3 = T_2 - (20 \sim 35)$.

In some embodiments, the polymerization time of the first initial initiation stage is 20-150 minutes, preferably 30-120 minutes, more preferably 30-80 minutes; the polymerization time of the second constant temperature polymerization stage is 300-900 minutes, preferably 400-800 minutes, preferably 400-700 minutes, more preferably 500-600 minutes; and the polymerization time of the third cooling polymerization stage is 80-300 minutes, preferably 80-250 minutes, preferably 100-250 minutes, more preferably 120-200 minutes.

In some embodiments, the monomer conversion rate of the second constant temperature polymerization stage is X, the monomer conversion rate of the first initial initiation stage is (0.125~0.215)*X, and the monomer conversion rate of the third cooling polymerization stage is (0.007~0.0715)*X, wherein the monomer conversion rate X of the second constant temperature polymerization stage is 60%-85%, preferably 65%-85%, more preferably 70%-80% or 70%-79%. In the present invention, the monomer conversion rate of the first stage, the second stage, and the third stage refers to the ratio of the weight of the monomers that undergo polymerization reaction in each stage to the total weight of the monomers.

In some embodiments, the solution polymerization is carried out under inert gas protection. In some embodiments, preferably, the solution polymerization is carried out under inert gas protection and the oxygen content is less than 1000 ppm. In some embodiments, the solution polymerization is carried out in a polymerization kettle.

Another aspect of the present invention relates to a process for preparing polyacrylonitrile-based carbon fibers, preferably the polyacrylonitrile-based carbon fibers of the present invention, comprising the steps of preparing polyacrylonitrile spinning dope into precursor fiber, and pre-oxidizing and carbonizing the precursor fibers to obtain the polyacrylonitrile-based carbon fibers; wherein the polyacrylonitrile spinning dope is the polyacrylonitrile spinning dope of the present invention or the polyacrylonitrile spinning dope prepared by the process for preparing the polyacrylonitrile spinning dope of the present invention.

In some embodiments, the precursor fiber preparation steps include: (1) coagulation of nascent fibers, (2) hot water drawing, (3) hot water washing, (3) oiling, (4) drying and densification, (5) steam drawing, (6) heat setting and (7) winding.

In some embodiments, the pre-oxidation temperature is 180-300°C, preferably divided into 4-6 temperature zones; the carbonization includes low-temperature carbonization and high-temperature carbonization, preferably, the low-temperature carbonization temperature is 300-700°C, and the high-temperature carbonization temperature is 1000-1500°C.

In some embodiments, the preparation process further comprises the steps of surface treatment and sizing.

DETAILED DESCRIPTION

For one of the above-mentioned purposes of the invention, the present invention provides a polyacrylonitrile-based carbon fiber containing micropores, wherein the average radial size $L_P$ of the micropores is less than or equal to 2.0 nm, the aspect ratio $L/L_P$ of the micropores is greater than or equal to 50 and less than or equal to 100, and the ratio of the volume of micropores with a radial size greater than 15 nm to the total micropore volume is greater than 0 and less than 10%.

In the present invention, L refers to the average size (length) of the micropores along the fiber axis (i.e., the length direction of the fiber), and $L_P$ refers to the average radial size of the micropores in the transverse direction of the fiber (i.e., perpendicular to the length of the fiber).

In the present invention, L and $L_P$ are obtained by using small angle X-ray scattering (SAXS) testing and the following dual-model Debye-Bueche analysis process:

$$I(q) = \frac{I_{01}}{(1 + q^2 L_{c1}^2)^2} + \frac{I_{02}}{(1 + q^2 L_{c2}^2)^2} + I_f$$

In the present invention, the micropore aspect ratio $L/L_P$ can be calculated based on the obtained L and $L_P$.

In the present invention, the scattering curves of two types of micropores (i.e., micropores with radial dimensions greater than 15 nm and all micropores) are fitted by the Debye-Bueche process, and the relative volumes of the two types of micropores are calculated according to the following formula to obtain the volume ratio of the two types of micropores.

$$Q = \int_0^\infty q^2 I(q) dq \; \propto V$$

L, $L_P$, and micropore volume are described in detail below.

In the present invention, the average radial size $L_P$ of the micropores may be less than or equal to 2.0 nm and greater than or equal to 0 nm, for example, less than or equal to 2.0 nm and greater than or equal to 0.1 nm, less than or equal to 2.0 nm and greater than or equal to 0.5 nm, or less than or equal to 2.0 nm and greater than or equal to 1.0 nm.

In the present invention, the aspect ratio $L/L_P$ of the micropores may be greater than or equal to 50 and less than or equal to 100, for example, greater than or equal to 50 and less than or equal to 90, or greater than or equal to 50 and less than or equal to 80, or greater than or equal to 50 and less than or equal to 70.

In the present invention, the ratio of the volume of micropores with radial dimensions greater than 15 nm to the total micropore volume may be greater than 0 and less than 10%, for example, greater than 0.1 % and less than 10%, or greater than 3% and less than 10%. In the present invention, the volume of micropores with radial dimensions greater than 15 nm refers to the total volume of all micropores with radial dimensions greater than 15 nm. In the present invention, the total micropore volume refers to the total volume of all micropores.

In some embodiments, preferably, the average radial size $L_P$ of the micropores may be less than or equal to 1.5 nm, the aspect ratio $L/L_P$ of the micropores may be greater than or equal to 60 and less than or equal to 100, and the ratio of the volume of the micropores with a radial size greater than 15 nm to the total micropore volume may be greater than 0 and less than 5%. In the present invention, the average radial size $L_P$ of the micropores may be less than or equal to 1.5 nm and greater than or equal to 0 nm, for example, less than or equal to 1.5 nm and greater than or equal to 0.1 nm, or less than or equal to 1.5 nm and greater than or equal to 1.0 nm. In the present invention, the aspect ratio $L/L_P$ of the micropores may be greater than or equal to 60 and less than or equal to 100, for example, greater than or equal to 60 and less than or equal to 90, or greater than or equal to 60 and less than or equal to 80, or greater than or equal to 60 and less than or equal to 70. In the present invention, the ratio of the volume of micropores with radial dimensions greater than 15 nm to the total micropore volume may be greater than 0 and less than 5%, for example, greater than 0.1 %, and less than 5%, greater than 3% and less than 5%, or greater than 4% and less than 5%.

In some embodiments, the carbon fiber has a diameter of less than 3% Cv. In the present invention, the calculation process of Cv is described in detail below.

In the present invention, there is no particular limitation on the number of fibers of the carbon fiber, for example, the number of fibers commonly known in the field of carbon fiber can be used. In some embodiments, preferably, the number of fibers of the polyacrylonitrile-based carbon fiber is 3000 to 24000.

In the present invention, the diameter of the carbon fiber is not particularly limited and the carbon fiber may have a carbon fiber diameter commonly used in the art. In some embodiments, the diameter of the polyacrylonitrile-based carbon fiber may be 1-10 $\mu$m, for example, 2-10 $\mu$m. In some embodiments, the diameter of the polyacrylonitrile-based carbon fiber may be 5-7 $\mu$m.

In the present invention, the tensile strength of the polyacrylonitrile-based carbon fiber may be 4.5-6.1 GPa, for example, 4.7-6.0 GPa or 4.9-5.8 GPa. The Cv value of the tensile strength of the polyacrylonitrile-based carbon fiber is less than 10%, for example, less than 7% or less than 5%.

In the present invention, the tensile modulus of the polyacrylonitrile-based carbon fiber is 260-340 GPa, for example, 270-330 GPa or 282-323 GPa. The Cv value of the tensile modulus of the polyacrylonitrile-based carbon fiber is lower than 10%, for example, lower than 7% or lower than 5%.

In some embodiments, preferably, the polyacrylonitrile-based carbon fiber has a diameter of 5-7 $\mu$m, a tensile strength of 4.9-5.8 GPa, a Cv value of tensile strength less than 5%, a tensile modulus of 282-323 GPa, and a Cv value of tensile modulus less than 5%.

In the present invention, the number and diameter of polyacrylonitrile precursor fiber and carbon fiber are measured by microscopy according to GB/T3364-2008.

In the present invention, the tensile strength and tensile modulus of carbon fiber are measured by the mechanical tensile process according to GB/T3362-2005.

To achieve the second purpose of invention above, the present invention provides a polyacrylonitrile spinning dope, which contains gel particles, wherein the total number of gel particles with a particle size greater than 0.15 $\mu$m is less than or equal to $1 \times 10^5$ particles/mL, and the ratio of the number of gel particles with a particle size greater than 5 $\mu$m to the total number of gel particles (i.e., the ratio of the number of gel particles with a particle size greater than 5 $\mu$m to the total number of gel particles) is less than or equal to 0.3%; wherein the equilibrium swelling degree of the gel particles is 250~5000%.

In the present invention, the particle size and number of gel particles are measured by single-particle optical sensing technology, in which a single particle blocks a portion of the incident light when passing through a narrow photosensitive area, causing the incident light intensity to reach the detector to decrease instantly. The attenuation amplitude of the intensity signal is theoretically proportional to the particle cross-stage, that is, the square of the particle diameter. A calibration curve of particle size and intensity signal size is established using standard particles, and the particle size is calculated based on the calibration curve, and the number of particles is counted. The specific measurement process of the particle size and number of gel particles is shown below.

As understood by those skilled in the art, equilibrium swelling degree refers to the ratio between the weight of the gel particles at the swelling equilibrium degree and the weight after the solvent is removed. The specific measurement process of equilibrium swelling is described below.

The total number of gel particles with a particle size greater than 0.15 $\mu$m contained in the polyacrylonitrile spinning dope of the present invention is less than or equal to $1 \times 10^5$ particles/mL. In some embodiments, the total number of gel particles having a particle size greater than 0.15 $\mu$m may be less than $9.8 \times 10^4$ particles/mL, less than $9.7 \times 10^4$ particles/mL, less than $9.5 \times 10^4$ particles/mL, less than $9.3 \times 10^4$ particles/mL, less than $9.1 \times 10^4$ particles/mL, less than $9.0 \times 10^4$ particles/mL, less than $8.8 \times 10^4$ particles/mL, less than $8.6 \times 10^4$ particles/mL, less than $8.4 \times 10^4$ particles/mL, less than $8.2 \times 10^4$ particles/mL, less than $8.0 \times 10^4$ particles/mL, less than $7.8 \times 10^4$ particles/mL, less than $7.6 \times 10^4$ particles/mL, less than $7.4 \times 10^4$ particles/mL, less than $7.2 \times 10^4$ particles/mL, or less than $7.0 \times 10^4$ particles/mL. The total number of gel particles with a particle size greater than 0.15 $\mu$m contained in the polyacrylonitrile spinning dope of the present invention is less than $1 \times 10^5$ particles/mL and greater than or equal to 0 particles. In some embodiments, the total number of gel particles having a particle size greater than 0.15 $\mu$m contained in the polyacrylonitrile spinning dope of the present invention is lower than or equal to $1 \times 10^5$ particles/mL and higher than or equal to 10 particles, or lower than or equal to $1 \times 10^5$ particles/mL and higher than or equal to 100 particles, or lower than or equal to $1 \times 10^5$ particles/mL and higher than or equal to 1000 particles, or lower than or equal to $1 \times 10^5$ particles/mL and higher than or equal to 10000 particles, or lower than or equal to $1 \times 10^5$ particles/mL and higher than or equal to 10000 particles, or lower than or equal to $1 \times 10^5$ particles/mL and higher than or equal to 20000 particles, or lower than or equal to $1 \times 10^5$ particles/mL and higher than or equal to 30000 particles, or lower than or equal to $1 \times 10^5$ particles /mL and higher than or equal to 40000 particles, or lower than or equal to $1 \times 10^5$ particles/mL and higher than or equal to 50000 particles.

In the present invention, the equilibrium swelling degree of the gel particles can be 250-5000%, for example, 260-5000%, 270-5000%, 280-5000%, 290-5000%, 300-5000%, 310-5000%, 320-5000%, 330-5000%, 340-5000%, 350-5000%, 360-5000%, 370-5000%, 380-5000%, 390-5000%, or 400-5000%. In some embodiments, the equilibrium swelling degree of the gel particles in the spinning dope may be 250-4000%, 250-3000%, 250-2000%, 250-1500%, 260-4000%, 260-3000%, 260-2000%, 260-1500%, 270-4000%, 270-3000%, 270-2000%, 270-1500%, 280-4000%, 280-3000%, 280-2000%, 280-1500%, 290-4000%, 290-3000%, 290-2000%, 290-1500%, 300-4000%, 300-3000%, 300-2000%, 300-1500%, 310~4000%, 310~3000%, 310~2000%, 310~1500%, 320~4000%, 320~3000%, 320~2000%, 320~1500%, 330~4000%, 330~3000%, 330~2000%, 330~1500%, 340~4000%, 340~3000%, 340~2000%, 340~1500%, 350~4000%, 350~3000%, 350~2000%, 350~1500%, 400~4000%, 400~3000%, 400~2000%, or 400~1500%.

The proportion of the number of gel particles with a particle size greater than 5 $\mu$m in the polyacrylonitrile spinning dope of the present invention to the total number of gel particles may be less than or equal to 0.3%; preferably less than or equal to 0.25%, more preferably less than or equal to 0.20%, and even more preferably less than or equal to 0.15%. In some embodiments, the proportion of the number of gel particles with a particle size greater than 5$\mu$m in the polyacrylonitrile spinning dope to the total number of gel particles may be less than 0.3%, less than 0.29%, less than 0.28%, less than 0.27%, less than 0.26%, less than 0.25%, less than 0.24%, less than 0.23%, less than 0.22%, less than 0.21%, less than 0.20%, less than 0.29%, less than 0.19%, less than 0.18%, less than 0.17%, less than 0.16%, less than 0.15%, or less than 0.14%.

The ratio of the number of gel particles with a particle size greater than 5 $\mu$m in the polyacrylonitrile spinning dope of the present invention to the total number of gel particles may be lower than 0.3% and higher than or equal to 0. In some embodiments, the ratio of the number of gel particles with a particle size greater than 5 $\mu$m in the polyacrylonitrile spinning dope of the present invention to the total number of gel particles may be lower than 0.3% and higher than or equal to 0.01%, or lower than 0.3% and higher than or equal to 0.05%.

In some embodiments, preferably, the total number of gel particles with a particle size greater than 0.15 $\mu$m in the polyacrylonitrile spinning dope of the present invention is less than $9.8 \times 10^4$ particles/mL, preferably less than $7.8 \times 10^4$ particles/mL, and more preferably less than $7.0 \times 10^4$ particles/mL; the proportion of gel particles with an average particle size greater than 5 $\mu$m in the total gel particles is less than 0.25%, preferably less than 0.21%, and more preferably less than 0.15%; and the equilibrium swelling degree of the gel particles is 300~4000%, 300~2000%, 400~2000%, preferably 500~2000% or 500~1000%.

The polyacrylonitrile spinning dope comprises a polyacrylonitrile polymer and a solvent.

As the polyacrylonitrile polymer, a polyacrylonitrile homopolymer, a polyacrylonitrile copolymer or a mixture thereof can be used. Specifically, the polyacrylonitrile polymer can contain 90 to 100% by mass of monomer units derived from acrylonitrile and 0 to 10% by mass of structural units derived from monomers copolymerizable with acrylonitrile. As monomers copolymerizable with acrylonitrile, various comonomers generally known in the art can be used, including, for example, acrylic acid, methacrylic acid, itaconic acid and their alkali metal salts, ammonium salts and lower alkyl esters; acrylamide and its derivatives; allyl sulfonic acid, methallyl sulfonic acid and their salts or alkyl esters; and the like.

There is no particular restriction on the concentration of the polyacrylonitrile polymer in the polyacrylonitrile spinning dope, and any suitable concentration commonly known in the art for polyacrylonitrile spinning dope can be used. In the present invention, for example, the concentration of the polyacrylonitrile polymer in the polyacrylonitrile spinning dope can be 15-30% by weight. In some embodiments, preferably, the weight ratio of the polyacrylonitrile polymer to the solvent in the polyacrylonitrile spinning dope can be (18-22): (82-78).

There is no particular restriction on the solvent in the polyacrylonitrile spinning dope, and any suitable solvent commonly known in the art for polyacrylonitrile spinning dope can be used. The solvent can be at least one selected from the group consisting of dimethyl sulfoxide (DMSO), dimethylformamide (DMF), dimethylacetamide (DMAC), and a mixture thereof.

In the present invention, the zero shear viscosity of the polyacrylonitrile spinning dope is 30-200 Pa·s, preferably 50-150 Pa·s, wherein the viscosity test temperature is 50°C. In the present invention, a rotational rheometer is used to test the zero shear viscosity, wherein the test temperature is $50 \pm 0.01$°C, the rotor diameter is 25 mm and the spacing is 1 mm; and wherein the zero shear viscosity of the polyacrylonitrile polymer solution is obtained by extrapolation. The specific determination process of the zero shear viscosity is as described below.

For the third purpose of the invention above, the present invention provides a process for preparing a polyacrylonitrile dope, and the preparation process is preferably used to prepare the polyacrylonitrile dope described in the second purpose of the invention above. The preparation process of the polyacrylonitrile dope of the present invention includes solution polymerization, wherein the solution polymerization adopts three-stage temperature control, wherein the temperature of the first stage (i.e., the initial initiation stage) is $T_1$ °C, the temperature of the second stage (constant temperature polymerization stage) is $T_2$ °C, and the temperature of the third stage (cooling polymerization stage) is $T_3$ °C; wherein $T_1$, $T_2$, and $T_3$ satisfy the following relationship:

$$T_1 = (0.5 \sim 1.4) * T_2 \text{ and } 35 \leq T_1 \leq 80;$$

and

$$T_3 = T_2 - (5 \sim 50) \text{ and } 50 \geq T_3 \geq 25.$$

In the process for preparing polyacrylonitrile dope of the present invention, the polymerization process of solution polymerization is divided into three stages according to the polymerization temperature as described above: the first stage (i.e., the initial initiation stage), the second stage (constant temperature polymerization stage) and the third stage (cooling polymerization stage), wherein the temperatures of the three stages are $T_1$, $T_2$ and $T_3$ respectively.

The desired temperatures $T_1$, $T_2$ and $T_3$ can be achieved by temperature detection and control processs generally known in the art. For example, a temperature detection device such as a thermometer, a thermocouple, etc. can be provided to detect the temperature. For example, the desired polymerization temperature can be provided by a heating device and a cooling device generally used in the art. For example, a control device can be provided to implement heating or cooling according to the detected temperature to provide the desired temperature. In some embodiments, a reactor with a jacket can be used to achieve temperature control.

In the present invention, $T_2$ may be in the range of 40 °C$\leq T_2 \leq$90 °C, preferably 50 °C$\leq$T2$\leq$80 °C. In some embodiments, preferably, $T_2$ is in the range of 50-80°C; for example, $T_2$ may be 50°C, 55°C, 60°C, 65°C, 70°C, 75°C, 80°C, or a range consisting of any two of the above values.

In the present invention, $T_1$ may be in the range of 35 °C$\leq T_1 \leq$80 °C , preferably 40 °C$\leq T_1 \leq$70 °C . In some embodiments, preferably, $T_1$ is in the range of 40-70°C; for example, $T_1$ may be 40 °C, 45°C, 50°C, 55°C, 60°C, 65°C, 70°C, or a range consisting of any two of the above values.

In the present invention, $T_3$ may be in the range of 25 °C$\leq T_3 \leq$50 °C, preferably 25 °C$\leq T_3 \leq$45 °C, more preferably 30 °C$\leq T_3 \leq$45 °C. In some embodiments, $T_3$ is preferably in the range of 30-45°C; for example, $T_3$ may be 30°C, 35°C, 40°C, 45°C, or a range consisting of any two of the above values.

In some embodiments, preferably, 50°C$\leq T_2 \leq$80°C, 40°C$\leq T_1 \leq$70°C and 30°C$\leq T_3 \leq$45°C.

In some embodiments, $T_3 = T_2 - (15\sim50)$, preferably $T_3 = T_2 - (15\sim40)$, more preferably $T_3 = T_2 - (20\sim35)$, and 50 °C $\geq T_3 \geq$25°C.

In the process of the present invention, solution polymerization is used to prepare polyacrylonitrile polymer to obtain polyacrylonitrile spinning dope. In the art, it is known to use solution polymerization to prepare polyacrylonitrile polymer. For example, in the process for preparing polyacrylonitrile dope of the present invention, a solution polymerization process known in the art can be used to obtain the spinning dope, provided that the solution polymerization adopts the three-stage program temperature control of the present invention.

For the solution polymerization in the present invention, an initiator commonly used in the art can be used. In some embodiments, the initiator can be a free radical initiator, including, for example, a peroxide initiator, an azo initiator , and a redox initiator.

The monomers and solvents used for solution polymerization may be as described above in the polyacrylonitrile spinning dope section.

In some embodiments, in the solution polymerization, the monomer conversion rate of the second stage is X, then the monomer conversion rate of the first stage is (0.125~0.215)*X, and the monomer conversion rate of the third stage is (0.007~0.0715)*X; wherein the monomer conversion rate X of the second stage ( constant temperature polymerization stage ) is 60%-85% , preferably 65%-85% , and more preferably 70%-80% or 70%-79%.

In the present invention, the polymerization time of the first initial initiation stage can be 20-150 minutes, preferably 30-120 minutes, more preferably 30-80 minutes; the polymerization time of the second constant temperature polymerization stage can be 300-900 minutes, preferably 400-800 minutes, preferably 400-700 minutes, more preferably 500-600 minutes; and the polymerization time of the third cooling polymerization stage can be 80-300 minutes, preferably 80-250 minutes , preferably 100-250 minutes , more preferably 120-200 minutes. In some embodiments, preferably, the polymerization time of the first stage (initial initiation stage) is 30-80 minutes, the second stage (constant temperature polymerization stage) time is 500-600 minutes, and the third stage (cooling polymerization stage) time is 120-200 minutes.

In the present invention, the monomer conversion rate of the first initial initiation stage can be 8-25%, preferably 8-20%, more preferably 10-18%; the monomer conversion rate of the second constant temperature polymerization stage can be 60%-85%, preferably 65%-85%, more preferably 70%-80% or 70%-79%; and the monomer conversion rate of the third cooling polymerization stage can be 0.2-8%, preferably 0.4-7%, more preferably 0.5-5 % or 1-5%.

In some embodiments, preferably, the monomer conversion rate of the first stage may be 10-18%, and the monomer conversion rate of the third stage may be 0.5-5 %, such as 1-5%.

The solution polymerization in the present invention is preferably carried out in the presence of an inert gas, such as nitrogen, helium, argon, xenon, and the like.

In the present invention, the inert gas is used so that the oxygen content (by volume) in the inert atmosphere is reduced to less than 3000 ppm, less than 2500 ppm, less than 2000 ppm, or less than 1000 ppm.

In some embodiments, preferably, the solution polymerization is carried out under inert gas protection, wherein the oxygen content is less than 1000 ppm.

In the present invention, the solution polymerization can be carried out in any suitable polymerization reactor. In some embodiments, the solution polymerization is carried out in a polymerization kettle.

As known in the art, after the polymerization is completed, the obtained crude dope can be processed, for example, the crude dope can be subjected to demonomerization and degassing treatment to obtain polyacrylonitrile spinning dope.

In some advantageous embodiments, the process for preparing the polyacrylonitrile spinning dope of the present invention prepares the polyacrylonitrile spinning dope of the present invention.

In order to achieve the fourth purpose of the invention above, the present invention provides a process for preparing polyacrylonitrile-based carbon fiber as described in one of the purposes of the invention above, comprising the following steps: a step of preparing polyacrylonitrile spinning dope into precursor fiber, and a step of pre-oxidizing and carbonizing the precursor fiber to obtain the polyacrylonitrile-based carbon fiber; wherein the polyacrylonitrile spinning dope is the polyacrylonitrile spinning dope described in the second purpose of the invention above or the polyacrylonitrile spinning dope obtained by the preparation process described in the third purpose of the invention above.

The preparation of precursor fibers from polyacrylonitrile spinning dope and the preparation of polyacrylonitrile-based carbon fibers from the precursor fiber are generally known in the art.

The precursor fiber can be prepared by wet spinning or dry-jet wet spinning, both of which are known in the art. In the present invention, the precursor fiber is preferably prepared by wet spinning.

For preparing precursor fiber from polyacrylonitrile spinning dope, the preparation process may include coagulation, drawing, washing, oiling, drying and densification, steam drawing, heat setting and winding steps. These steps are all known in the art and those skilled in the art may suitably select and use these steps.

For the coagulation step, after the nascent fibers leave the spinning hole, it enters the first coagulation bath to coagulate the nascent fiber. Those skilled in the art can easily select the composition and temperature of the first coagulation bath. In some embodiments, the temperature of the first coagulation bath is 35 ° C and the first coagulation bath is 80% dimethyl sulfoxide aqueous solution. After leaving the first coagulation bath, the filaments can optionally be further passed through one or more subsequent coagulation baths, for example, can pass through the second and third coagulation baths. After leaving the last coagulation bath, the coagulated filaments can be drawn. The drawing is, for example, drawn in water steam or hot water. Those skilled in the art can appropriately select the drawing ratio. After drawing, the filaments can be washed, for example, washed with water, to remove residual solvent. After washing, the filaments can be oiled and dried and densified. Oiling agents commonly used in the art can be used for oiling and drying and densification operations commonly used in the art can be used to implement drying and densification. The oiling and drying densification can be implemented once or multiple times, and the same or different oiling agents and drying densification conditions can be used. After drying and densification, the obtained filaments can be further drawn, such as steam drawing. Those skilled in the art can appropriately select the draw ratio and drawing conditions. After drawing, the obtained filaments can be heat-set. For example, heat setting can be performed by passing the filaments through multi-stage hot rollers. After heat setting, the precursor fiber is obtained and can be wound up for subsequent use.

As known to those skilled in the art, one or more of the above steps may be omitted or added or the order of these steps may be adjusted.

In some embodiments, preferably, the precursor fiber is prepared by a wet spinning process, wherein the wet spinning process comprises the following steps: (1) coagulation of nascent fibers, (2) hot water drawing, (3) hot water washing, (3) oiling, (4) drying and densification, (5) steam drawing, (6) heat setting and (7) winding.

After the precursor fiber is obtained, the precursor fiber can be prepared into polyacrylonitrile-based carbon fiber. The process of preparing polyacrylonitrile-based carbon fiber from polyacrylonitrile-based precursor fiber is known in the art. The process of the present invention can use a process known in the art to prepare polyacrylonitrile-based carbon fiber.

The preparation of the precursor fiber into polyacrylonitrile-based carbon fibers may include a pre-oxidation step and a carbonization step. For the pre-oxidation step, the pre-oxidation may be performed in a plurality of temperature zones, such as 2 to 6 temperature zones, in an air atmosphere using a gradient temperature rise process. The pre-oxidation starting temperature may be 170°C to 200°C, and the pre-oxidation ending temperature may be 260 to 300°C. During the pre-oxidation, a certain drawing may be applied to the fiber, such as a drawing rate of 1-5%. The pre-oxidation time may be 30 to 120 minutes.

The obtained pre-oxidized fiber is carbonized to obtain polyacrylonitrile-based carbon fiber. The carbonization treatment may include low-temperature carbonization treatment and high-temperature carbonization treatment. The temperature of the low-temperature carbonization treatment may be 300°C to 900°C and the treatment time may be 1 to 8 minutes. The temperature of the high-temperature carbonization treatment may be 1000 to 1500°C and the treatment time may be 1 to 8 minutes. In some embodiments, the temperature of the low-temperature carbonization treatment is 300 to 700°C, and the temperature of the high-temperature carbonization treatment is 1000 to 1500°C. As known in the art, the carbonization treatment is carried out in the presence of an inert gas. The inert gas may be, for example, nitrogen, helium, argon, xenon, and the like.

In some embodiments, preferably, the pre-oxidation temperature is 180-300°C, more preferably divided into 4-6 temperature zones. In some embodiments, preferably, the carbonization includes low-temperature carbonization and high-temperature carbonization, the low-temperature carbonization temperature is 300-700°C, and the high-temperature carbonization temperature is 1000-1500°C.

In some embodiments, optionally, after carbonization, a graphitization process may be performed. The graphitization process is known in the art, and a graphitization process generally known in the art may be used.

In some embodiments, the preparation process may further include a surface treatment step and a sizing step.

As known to those skilled in the art, the carbon fiber (bundle) of the present invention can be surface treated before sizing. For example, oxidation treatment can be performed to improve the affinity and adhesion between the carbon fiber and the matrix resin in the composite material.

The sizing treatment can be carried out by various sizing treatment processs known in the art. The process of the present invention does not particularly limit the sizing treatment process, sizing agent and sizing conditions, as long as the desired sizing agent can be imparted to the carbon fiber. After the sizing treatment, a drying treatment can be carried out to dry and remove the solvent or dispersion medium used in the sizing treatment process.

The present invention adopts an acrylonitrile solution polymerization process to prepare a polyacrylonitrile spinning dope, wherein the polymerization process adopts three-stage temperature control and optionally, but preferably, controls the oxygen content of the polymerization kettle, so that the gel particles present in the obtained polyacrylonitrile spinning dope meet the requirements of the present application, and the gel particles have a high equilibrium swelling degree as defined in the present application. The gel particles will follow the fiber body to undergo axial tensile deformation in the subsequent processing process and produce axially narrow and long micropores in the final carbon fiber, which can reduce the negative impact on the mechanical properties of the carbon fiber and ensure that the carbon fiber has good mechanical properties. Therefore, the carbon fiber containing micropores and having high performance of the present invention can be obtained.

In the present invention, the obtained carbon fiber has micropores, the average radial size $L_P$ of the micropores is less than or equal to 2.0 nm, the aspect ratio $L/L_P$ of the micropores is greater than or equal to 50, and the ratio of the volume of micropores with radial size greater than 15 nm to the total micropore volume is less than 10%. When the micropores meet the requirements of the present application, the negative impact of the presence of the micropores on the mechanical properties of the carbon fiber can be reduced, so that the carbon fiber has good mechanical properties.

The present invention relates to following testing processes.

Zero Shear Viscosity of Polyacrylonitrile Polymer Solutions

The test was conducted using a rotational rheometer at a test temperature of $50\pm0.01°C$, a rotor diameter of 25mm, and a spacing of 1mm. During the test, in order to prevent the sample from absorbing water and the solvent from volatilizing and affecting the experimental results, a layer of methyl silicone oil was evenly applied on the free surface of the sample that was in contact with the air. The change in sample viscosity with shear rate was measured, and the zero shear viscosity of the polyacrylonitrile polymer solution was obtained by extrapolation.

Conversion rate

The conversion rate of the monomers in the polymerization process is determined by the gravimetric process. The initial monomer concentration of the polymerization is A. During the polymerization process or after the polymerization, 2.0000 g of the polymer solution is placed on a glass plate, and the polymer solution is flattened by the glass plate and washed with water to form a film. The polymer film is washed with boiling water for 1 hour to remove the residual solvent. The polymer film is dried in a vacuum drying oven (pressure is 2 KPa A, drying temperature is 80 °C, and drying time is 8 hours) to constant weight, and the mass is recorded as m (in grams). The conversion rate is $[m/(A\times2)]\times100\%$.

Gel Particle Counting and Particle Size Analysis

The number and particle size of gel particles in the polyacrylonitrile polymer solution were measured using the AccuSizer A7000 SIS counting particle size analyzer. The test environment temperature was $25\pm1°C$ and the humidity was 20-80%. The counting particle size analyzer was placed in an ultraclean laboratory to reduce the impact of environmental dust and impurities on the test results. The AccuSizer A7000 SIS uses single-particle optical sensing technology to achieve particle counting and analysis, in which a single particle blocks a portion of the incident light when passing through a narrow photosensitive area, causing the incident light intensity reaching the detector to decrease instantly. The attenuation amplitude of the intensity signal is theoretically proportional to the particle cross-section, that is, the square of the particle diameter. A calibration curve of particle size and intensity signal size is established using standard particles, and the particle size is calculated based on the calibration curve, and the number of particles is counted. The detector uses LE400-05, the particle size detection range is 0.15-400 $\mu$m, and the maximum detection concentration is 10,000 per milliliter. The sample volume is 5mL and the flow rate is 30.0mL/min. Before testing, the polyacrylonitrile polymer solution was diluted 20 times with a clean solvent to ensure that the number of particles per milliliter of the diluted solution was less than 10,000. The clean solvent is a solvent obtained by filtering the solvent with a 0.45 micron PTFE filter membrane so that the number of particles in the filtered solvent is less than 100 particles/mL.

Equilibrium swelling degree

In the present invention, the equilibrium swelling degree of the gel particles is measured in the following manner.

Take an appropriate amount of gel sample and extract it using a Soxhlet extractor (the solvent is DMF, the extraction temperature is 145°C, and the pressure is normal pressure). The soluble polymer adhering to the surface of the gel sample is removed by extraction, and the sample is fully swollen to equilibrium in the Soxhlet extractor. The entire extraction process lasts at least 24 hours. Then take out the swollen equilibrium gel sample, absorb the residual solvent on the surface with absorbent paper, and accurately weigh its mass, which is recorded as $m_{eq}$. Finally, wash the swollen equilibrium gel sample with water and perform vacuum heat drying (pressure of 2 KPa A, temperature of 80°C, and time of 8 hours), and after it is completely dried, take it out and place it in a dryer, and naturally cool it to room temperature to obtain a dry gel sample. Take out the cooled and dried gel sample, accurately weigh its mass, and record it as $m_0$.

Calculate the equilibrium swelling degree by the following formula:

$$\text{Equilibrium swelling degree} = \frac{m_{eq} - m_0}{m_0} \times 100\%$$

The gel sample is taken from the insoluble polymer attached to the outer surface of the filter element of the filter. The filter is a 316L stainless steel metal fiber sintered felt filter with a filtration accuracy of 1 $\mu$m. The polyacrylonitrile solution (spinning dope) flows from the outer surface of the filter element to the core of the filter element, and the filtered polyacrylonitrile solution flows out of the core. The gel particles are intercepted on the outer surface of the filter element and in the internal pore structure of the stainless steel metal fiber sintered felt. When the pressure difference before and after the filter exceeds 4MPa, switch to the standby filter, remove the old filter element, and take the insoluble polymer attached to the outer surface of the filter element for the gel particle equilibrium swelling degree test.

Number and diameter of polyacrylonitrile precursor fiber and carbon fiber The measurement is carried out using a microscope process in accordance with GB/T3364-2008. Randomly take a section of multifilament with a length of 200 mm from the polyacrylonitrile precursor fiber or carbon fiber multifilament sample to be tested. Use a sharp knife to take a small section of fiber bundle with a length of 0.2-0.3 mm from the fiber multifilament to be tested, place the taken small section of fiber bundle on a microscope slide. Add a drop of optical clear resin diluted with xylene, disperse the fiber with a clean sharp needle, and then cover a microscope cover glass. The transmission microscope has a mechanical stage that allows the microscope slide to move in two directions perpendicular to each other. Under the premise of at least meeting the observation magnification of 500 times, the resolution of the transmission microscope should be as low as 2 $\mu$m.

Carbon fiber tensile strength and tensile modulus

The mechanical tensile process is adopted according to GB/T3362-2005. They are determined by loading the tensile of fiber, in which the resin is impregnated and cured, until failure. The tensile strength is obtained by dividing the breaking load by the cross-section area of the carbon fiber multifilament, and the tensile modulus is determined by the specified strain limit. Ten specimens are measured in each test group, and there should be no less than 6 valid specimens. The multifilament is prepared by manual resin impregnation, and the weight ratio of the impregnation solution is TDE-85 epoxy resin: diaminodiphenylmethane DDM: acetone = 100:45:150. After impregnation, the specimen should be guaranteed to be free of liquid beads and the multifilaments should not be adhered to each other. A three-stage temperature rise curing is adopted, 60°C-90°C-150°C, 45 minutes per stage. After curing, the specimen is pasted with a reinforcement sheet and placed in an oven at 80°C for curing for 1 hour to obtain the final test specimen.

Coefficient of dispersion

According to GB/T 1446-2005, the arithmetic mean $\overline{X}$ and standard deviation S of the test performance are calculated by the following formula, and finally the coefficient of dispersion Cv of the performance can be calculated.

Arithmetic mean

$$\overline{X} = \frac{\sum_{i=1}^{n} X_i}{n}$$

Standard Deviation

$$S = \sqrt{\frac{\sum_{i=1}^{n} (X_i - \overline{X})^2}{n-1}}$$

$$C_v = \frac{S}{\overline{\overline{X}}}$$

Characterization of micropores in precursor fiber and carbon fibers

The small angle X-ray scattering (SAXS) process was used for characterization according to the following literature [1]. The test was carried out at the BL16B1 small angle scattering beamline of the Shanghai Synchrotron Radiation Source. The wavelength of the incident X-ray was 0.124nm, and a Pilatus 2M detector was used. The number of detector pixels was 1475*1679, and the pixel size was 172*172$\mu$m. The distance from the beam sample to the detector was 2092mm. The test data was processed by determining the center of the scattering signal, converting the scattering data, normalizing the light intensity, and subtracting the background, eliminating the influence of external conditions such as the sample, light intensity, and background during the test.

For the two-size micropore system, the following dual-model Debye-Bueche analysis process is used:

$$I(q) = \frac{I_{01}}{(1 + q^2 L_{c1}^2)^2} + \frac{I_{02}}{(1 + q^2 L_{c2}^2)^2} + I_f$$

Where q is the scattering vector, I(q) is the scattering intensity, $I_0$ is the intensity scaling factor, $L_c$ is the Debye correlation length, and $I_f$ is the background of the electron density fluctuation. $I_f$ is obtained by the following process: draw a "$q^4$ - I(q)*$q^4$" curve, and after linear fitting, the slope is the background of the electron density fluctuation at this point. $I_0$ and $L_c$ can be obtained by linear fitting, and on this basis, the correlation distances $L_{c1}$ and $L_{c2}$ can be obtained by fitting the above formula. For sparse micropore systems, the size of the correlation distance is close to the size of the micropores. Therefore, Debye-Bueche analysis is performed on the SAXS signals in the meridian and equatorial directions respectively, and the size L of the micropore along the fiber axis and size $L_P$ of the micropores along the fiber radial can be obtained. The aspect ratio $L/L_P$ of the micropores can be calculated based on the axial size L and radial $L_P$ of the micropores.

For the scattering of micropores, there is an invariant

$$Q = \int_0^\infty q^2 I(q) dq \ \propto V$$

$V$ is the volume of the micropores. Based on the scattering curves of the two micropores fitted by the Debye-Bueche process, the relative volumes of the two micropores can be calculated using this formula.

Literature [1]: Analysing the nanoporous structure of aramid fibres, Brian R. Pauw et al., J. Appl. Cryst. (2010). 43, 837-849

Evaluation of the filament fuzziness amount of nascent fibers

During the normal spinning process, the amount of filament fuzziness accumulated at the bath roller of the first coagulation bath was collected every 24 hours. After being thoroughly dried (pressure of 2 KPa A , temperature of 80°C, and time of 8 hours ), the weight of the filament fuzziness was weighed and taken as the filament fuzziness amount of nascent fibers.

Nascent fiber filament breakage

The frequency of shutdown due to filament breakage is counted to judge the filament breakage situation. For example, after 20 days of continuous spinning, the shutdown due to filament breakage is 20 days/time.

The present invention will be further described below by way of examples.

The raw materials and reagents used in the examples and comparative examples can be purchased directly or prepared according to the preparation processs disclosed in the prior art. If necessary, the raw materials or reagents can be treated in a manner known in the art before use to meet the needs of the reaction. For example, acrylonitrile is distilled to remove the polymerization inhibitor before use.

In the examples and comparative examples, the oil used was ADVALON® CF 3295 from Wacker Chemicals (China) Co., Ltd.

[Example 1]

(1) Preparation of dope: acrylonitrile was subjected to solution polymerization, DMSO was used as solvent, and azobisisobutyronitrile was used as initiator. The total monomer concentration was 20.5wt%, the amount of initiator used was 0.34wt% of the total monomer mass. The comonomer was itaconic acid, and itaconic acid accounted for 1mol% of the total monomer mass. The polymerization temperature was controlled by three stages. Nitrogen was used for replacement before the polymerization temperature was raised, and the oxygen content in the polymerization kettle was 980ppm. The initial stage initiation temperature was 40°C, and the duration was 60min. The middle stage constant temperature polymerization temperature was 80°C, and the duration was 600min. The final stage cooling polymerization temperature was 45°C, and the duration was 120min. The crude dope obtained after the polymerization was subjected to de-monomerization and degassing treatment to obtain a polyacrylonitrile solution (dope), wherein the demonomerization pressure was 1.0 KPa A, the demonomerization feed temperature was 72, the demonomerization residence time was 60 min; the degassing pressure was 2.0 KPa A, the degassing feed temperature was 65°C, and the degassing residence time was 120 min. The solid content of the polyacrylonitrile solution was 19.0 wt%, and the zero shear viscosity of the solution measured at 50 °C was 86 Pa·s. The total number $Np$ of gel particles with a particle size greater than 0.15 $\mu$m in the polyacrylonitrile solution was 96579 particles/mL, the number of gel particles with a particle size greater than 5 $\mu$m accounted for 0.12% of the total number of gel particles, and the equilibrium swelling degree of the gel particles was 300%.

(2) Preparation of precursor fiber: The polyacrylonitrile solution prepared in the above (1) was metered by a metering pump, filtered by a sintered metal filter with a filter accuracy of 5$\mu$m, extruded through a spinneret and entered the first coagulation bath. The spinneret aperture was 55$\mu$m and the number of spinneret holes was 12,000. The temperature of the first coagulation bath was 35°C, the first coagulation bath was 80% dimethyl sulfoxide aqueous solution, and the draw ratio was -30%. After the nascent fiber was coagulated, it entered the second and third coagulation baths through a godet roller. The coagulation bath concentrations were 60% and 30%, respectively, the temperatures were 40°C and 60°C, respectively , and the draw ratios were 1.0 and 1.05, respectively. Then, it was drawn by hot water for 3 times, with the temperatures of 90°C, 92°C, and 95°C, respectively, and the draw ratios of 1.20, 1.41, and 2.0, respectively, and then washed by water for 9 times, with a step-by-step temperature increase, wherein the 1st to 3rd washing temperature was 50°C, the 4th to 6th washing temperature was 60°C, and the 7th to 9th washing temperature was 70°C. No drawing was performed during the washing stage. After that, the first oiling was performed, with a oil concentration of 1.2%, and the first drying and densification was performed, with a drying temperature of 95°C; then the second oiling was performed, with a oil concentration of 2.0% , and the second drying and densification was performed, with a drying temperature of 130°C. Then, the fiber was subjected to steam drawing, with a steam pressure of 0.35MPa and a steam draw ratio of 3.2. After that, the fiber was heat-set, with a heat-setting steam pressure of 0.1MPa. Finally, the fiber was winded to obtain carbon precursor fiber. During the coagulation process of the nascent fiber, there were few filament fuzziness and breakage, and the frequency of shutdown due to filament fuzziness and breakage was 37 days/time. The diameter dispersion coefficient (Cv value) of the precursor fiber was 2.7%. The precursor fiber was characterized by small-angle X-ray scattering (SAXS), and the average radial size $L_P$ of the micropores was 1.85nm, and the aspect ratio $L/L_P$ of the micropores was 62.

(3) Preparation of carbon fiber: The polyacrylonitrile precursor fiber prepared in (2) above was subjected to heat stabilization treatment in the range of 180-280°C through 5 air atmosphere heating furnaces, to obtain pre-oxidized fiber. The temperatures of these 5 air atmosphere heating furnaces were 181°C, 222°C, 234° C, 252 °C, and 273°C respectively. The total heating time was 62 min, and the total draft was 2.2%. The obtained pre-oxidized fiber was subjected to low-temperature carbonization and high-temperature carbonization treatment in nitrogen to obtain carbon fiber. The low-temperature carbonization temperature was 300-700°C, the heat treatment time was 3.8 min, and the draft was 2.8%; the high-temperature carbonization temperature was 1000-1500°C, the heat treatment time was 1.8 min, and the draft was -2.8%. The micropores of the obtained carbon fiber were characterized by small angle X-ray scattering (SAXS). The average radial size $L_P$ of the micropores perpendicular to the fiber axis direction was 1.65nm, the aspect ratio $L/L_P$ of the micropore was 58, and the volume ratio of the micropores with radial size greater than 15 nm to the total micropore volume was 8.5%. The average diameter of the carbon fiber was $5\mu$m, the diameter dispersion coefficient (Cv value) was 2.5%, the tensile strength was 5.5GPa, the tensile strength Cv value was 4.5%, the tensile modulus was 303GPa, and the tensile modulus Cv value was 4.0%.

[Example 2]

(1) Preparation of dope: acrylonitrile was subjected to solution polymerization, DMF was used as solvent, and azobisisobutyronitrile was used as initiator. The total monomer concentration was 20.5wt%, the amount of initiator used was 0.34wt% of the total monomer mass. The comonomer was itaconic acid, and itaconic acid accounted for 1mol% of the total monomer mass. The polymerization temperature was controlled by three stages. Nitrogen was used for replacement before the polymerization temperature was raised, and the oxygen content in the polymerization kettle was 760ppm. The initial stage initiation temperature was 55°C, and the duration was 80min. The middle stage constant temperature polymerization temperature was 65°C, and the duration was 500min. The final stage cooling polymerization temperature was 40°C, and the duration was 200min. The crude dope obtained after the polymerization was subjected to de-monomerization and degassing treatment to obtain a polyacrylonitrile solution (dope), wherein the demonomerization pressure was 1.0 KPa A, the demonomerization feed temperature was 72, the demonomerization residence time was 60 min; the degassing pressure was 2.0 KPa A, the degassing feed temperature was 65°C, and the degassing residence time was 120 min. The solid content of the polyacrylonitrile solution was 18.0 wt%, and the zero shear viscosity of the solution measured at 50 °C was 50 Pa·s. The total number $Np$ of gel particles with a particle size greater than 0.15 $\mu$m in the polyacrylonitrile solution was 75744 particles/mL, the number of gel particles with a particle size greater than 5 $\mu$m accounted for 0.11% of the total number of gel particles, and the equilibrium swelling degree of the gel particles was 500%.

(2) Preparation of precursor fiber: The polyacrylonitrile solution prepared in the above (1) was metered by a metering pump, filtered by a sintered metal filter with a filter accuracy of 5$\mu$m, extruded through a spinneret and entered the first coagulation bath. The spinneret aperture was 55$\mu$m and the number of spinneret holes was 24,000. The temperature of the first coagulation bath was 35°C, the first coagulation bath was 80% dimethyl sulfoxide aqueous solution, and the draw ratio was -30%. After the nascent fiber was coagulated, it entered the second and third coagulation baths through a godet roller. The coagulation bath concentrations were 60% and 30%, respectively, the temperatures were 40°C and 60°C, respectively , and the draw ratios were 1.0 and 1.05, respectively. Then, it was drawn by hot water for 3 times, with the temperatures of 90°C, 92°C, and 95°C, respectively, and the draw ratios of 1.20, 1.41, and 2.0, respectively, and then washed by water for 9 times, with a step-by-step temperature increase, wherein the 1st to 3rd washing temperature was 50°C, the 4th to 6th washing temperature was 60°C, and the 7th to 9th washing temperature was 70°C. No drawing was performed during the washing stage. After that, the first oiling was performed, with a oil concentration of 1.2%, and the first drying and densification was performed, with a drying temperature of 95°C; then the second oiling was performed, with a oil concentration of 2.0% , and the second drying and densification was performed, with a drying temperature of 130°C. Then, the fiber was subjected to steam drawing, with a steam pressure of 0.35MPa and a steam draw ratio of 3.2. After that, the fiber was heat-set, with a heat-setting steam pressure of 0.1MPa. Finally, the fiber was winded to obtain carbon precursor fiber. During the coagulation process of the nascent fiber, there was few filament fuzziness and breakage, and the frequency of shutdown due to filament fuzziness and breakage was 35 days/time. The diameter dispersion coefficient (Cv value) of the precursor fiber was 2.5%. The precursor fiber was characterized by small-angle X-ray scattering (SAXS), and the average radial size $L_P$ of the micropores was 1.85nm, and the aspect ratio $L/L_P$ of the micropores was 58.

(3) Preparation of carbon fiber: The polyacrylonitrile precursor fiber prepared in (2) above was subjected to heat stabilization treatment in the range of 180-280°C through 5 air atmosphere heating furnaces, to obtain pre-oxidized fiber. The temperatures of these 5 air atmosphere heating furnaces were 181°C, 222°C, 234° C, 252 °C, and 273°C respectively. The total heating time was 62 min, and the total draft was 2.2%. The obtained pre-oxidized fiber was subjected to low-temperature carbonization and high-temperature carbonization treatment in nitrogen to obtain carbon fiber. The low-temperature carbonization temperature was 300-700°C, the heat treatment time was 3.8 min, and the draft was 2.8%; the high-temperature carbonization temperature was 1000-1500°C, the heat treatment time was 1.8 min, and the draft was -2.8%. The micropores of the obtained carbon fiber were characterized by small angle X-ray scattering (SAXS). The average radial size $L_P$ of the micropores perpendicular to the fiber axis direction was 1.76 nm, the aspect ratio $L/L_P$ of the micropore was 53, and the volume ratio of the micropores with radial size greater than 15 nm to the total micropore volume was 9.5%. The average diameter of the carbon fiber was 7 μm, the diameter dispersion coefficient (Cv value) was 2.6%, the tensile strength was 4.9 GPa, the tensile strength Cv value was 4.5%, the tensile modulus was 282GPa, and the tensile modulus $C_V$ value was 4.9%.

[Example 3]

(1) Preparation of dope: acrylonitrile was subjected to solution polymerization, DMAC was used as solvent, and azobisisobutyronitrile was used as initiator. The total monomer concentration was 20.5wt%, the amount of initiator used was 0.34wt% of the total monomer mass. The comonomer was itaconic acid, and itaconic acid accounted for 1mol% of the total monomer mass. The polymerization temperature was controlled by three stages. Nitrogen was used for replacement before the polymerization temperature was raised, and the oxygen content in the polymerization kettle was 340ppm. The initial stage initiation temperature was 70°C, and the duration was 30min. The middle stage constant temperature polymerization temperature was 50°C, and the duration was 600min. The final stage cooling polymerization temperature was 30°C, and the duration was 150min. The crude dope obtained after the polymerization was subjected to de-monomerization and degassing treatment to obtain a polyacrylonitrile solution (dope), wherein the demonomerization pressure was 1.0 KPa A, the demonomerization feed temperature was 72, the demonomerization residence time was 60 min; the degassing pressure was 2.0 KPa A, the degassing feed temperature was 65°C, and the degassing residence time was 120 min. The solid content of the polyacrylonitrile solution was 22.0 wt%, and the zero shear viscosity of the solution measured at 50 °C was 150 Pa·s. The total number $Np$ of gel particles with a particle size greater than 0.15 μm in the polyacrylonitrile solution was 67738 particles/mL, the number of gel particles with a particle size greater than 5 μm accounted for 0.10% of the total number of gel particles, and the equilibrium swelling degree of the gel particles was 1000%.

(2) Preparation of precursor fiber: The polyacrylonitrile solution prepared in the above (1) was metered by a metering pump, filtered by a sintered metal filter with a filter accuracy of 5μm, extruded through a spinneret and entered the first coagulation bath. The spinneret aperture was 55μm and the number of spinneret holes was 3000. The temperature of the first coagulation bath was 35°C, the first coagulation bath was 80% dimethyl sulfoxide aqueous solution, and the draw ratio was -30%. After the nascent fiber was coagulated, it entered the second and third coagulation baths through a godet roller. The coagulation bath concentrations were 60% and 30%, respectively, the temperatures were 40°C and 60°C, respectively , and the draw ratios were 1.0 and 1.05, respectively. Then, it was drawn by hot water for 3 times, with the temperatures of 90°C, 92°C, and 95°C, respectively, and the draw ratios of 1.20, 1.41, and 2.0, respectively, and then washed by water for 9 times, with a step-by-step temperature increase, wherein the 1st to 3rd washing temperature was 50°C, the 4th to 6th washing temperature was 60°C, and the 7th to 9th washing temperature was 70°C. No drawing was performed during the washing stage. After that, the first oiling was performed, with a oil concentration of 1.2%, and the first drying and densification was performed, with a drying temperature of 95°C; then the second oiling was performed, with a oil concentration of 2.0% , and the second drying and densification was performed, with a drying temperature of 130°C. Then, the fiber was subjected to steam drawing, with a steam pressure of 0.35MPa and a steam draw ratio of 3.2. After that, the fiber was heat-set, with a heat-setting steam pressure of 0.1MPa. Finally, the fiber was winded to obtain carbon precursor fiber. During the coagulation process of the nascent fiber, there were few filament fuzziness and breakage, and the frequency of shutdown due to filament fuzziness and breakage was 48 days/time. The diameter dispersion coefficient (Cv value) of the precursor fiber was 2.6%. The precursor fiber was characterized by small-angle X-ray scattering (SAXS), and the average radial size $L_P$ of the micropores was 1.62nm, and the aspect ratio $L/L_P$ of the micropores was 62.

(3) Preparation of carbon fiber: The polyacrylonitrile precursor fiber prepared in (2) above was subjected to heat stabilization treatment in the range of 180-280°C through 5 air atmosphere heating furnaces, to obtain pre-oxidized fiber. The temperatures of these 5 air atmosphere heating furnaces were 181°C, 222°C, 234° C, 252 °C, and 273°C respectively. The total heating time was 62 min, and the total draft was 2.2%. The obtained pre-oxidized fiber was subjected to low-temperature carbonization and high-temperature carbonization treatment in nitrogen to obtain carbon fiber. The low-temperature carbonization temperature was 300-700°C, the heat treatment time was 3.8 min, and the draft was 2.8%; the high-temperature carbonization temperature was 1000-1500°C, the heat treatment time was 1.8 min, and the draft was -2.8%. The micropores of the obtained carbon fiber were characterized by small angle X-ray scattering (SAXS). The average radial size $L_P$ of the micropores perpendicular to the fiber axis direction was 1.57nm, the aspect ratio $L/L_P$ of the micropore was 59, and the volume ratio of the micropores with radial size greater than 15 nm to the total micropore volume was 6.3%. The average diameter of the carbon fiber was 6μm, the diameter dispersion coefficient (Cv value) was 2.4%, the tensile strength was 5.8GPa, the tensile strength Cv value was 3.5%, the tensile modulus was 323GPa, and the tensile modulus $C_V$ value was 4.3%.

[Example 4]

(1) Preparation of dope: acrylonitrile was subjected to solution polymerization, DMSO was used as solvent, and azobisisobutyronitrile was used as initiator. The monomer concentration was 20.5wt%, the amount of initiator used was 0.34wt% of the total monomer mass. The comonomer was itaconic acid, and itaconic acid accounted for 1mol% of the total monomer mass. The polymerization temperature was controlled by three stages. Nitrogen was used for replacement before the polymerization temperature was raised, and the oxygen content in the polymerization kettle was 600ppm. The initial stage initiation temperature was 40°C, and the duration was 60min. The middle stage constant temperature polymerization temperature was 80°C, and the duration was 600min. The final stage cooling polymerization temperature was 45°C, and the duration was 120min. The crude dope obtained after the polymerization was subjected to de-monomerization and degassing treatment to obtain a polyacrylonitrile solution (dope), wherein the demonomerization pressure was 1.0 KPa A, the demonomerization feed temperature was 72, the demonomerization residence time was 60 min; the degassing pressure was 2.0 KPa A, the degassing feed temperature was 65°C, and the degassing residence time was 120 min. The solid content of the polyacrylonitrile solution was 19.8 wt%, and the zero shear viscosity of the solution measured at 50 °C was 88 Pa·s. The total number $Np$ of gel particles with a particle size greater than 0.15 μm in the polyacrylonitrile solution was 91456 particles/mL, the number of gel particles with a particle size greater than 5 μm accounted for 0.11% of the total number of gel particles, and the equilibrium swelling degree of the gel particles was 800%.

(2) Preparation of precursor fiber: The polyacrylonitrile solution prepared in the above (1) was metered by a metering pump, filtered by a sintered metal filter with a filter accuracy of 5μm, extruded through a spinneret and entered the first coagulation bath. The spinneret aperture was 55μm and the number of spinneret holes was 12,000. The temperature of the first coagulation bath was 35°C, the first coagulation bath was 80% dimethyl sulfoxide aqueous solution, and the draw ratio was -30%. After the nascent fiber was coagulated, it entered the second and third coagulation baths through a godet roller. The coagulation bath concentrations were 60% and 30%, respectively, the temperatures were 40°C and 60°C, respectively , and the draw ratios were 1.0 and 1.05, respectively. Then, it was drawn by hot water for 3 times, with the temperatures of 90°C, 92°C, and 95°C, respectively, and the draw ratios of 1.20, 1.41, and 2.0, respectively, and then washed by water for 9 times, with a step-by-step temperature increase, wherein the 1st to 3rd washing temperature was 50°C, the 4th to 6th washing temperature was 60°C, and the 7th to 9th washing temperature was 70°C. No drawing was performed during the washing stage. After that, the first oiling was performed, with a oil concentration of 1.2%, and the first drying and densification was performed, with a drying temperature of 95°C; then the second oiling was performed, with a oil concentration of 2.0% , and the second drying and densification was performed, with a drying temperature of 130°C. Then, the fiber was subjected to steam drawing, with a steam pressure of 0.35MPa and a steam draw ratio of 3.2. After that, the fiber was heat-set, with a heat-setting steam pressure of 0.1MPa. Finally, the fiber was winded to obtain carbon precursor fiber. During the coagulation process of the nascent fiber, there were few filament fuzziness and breakage, and the frequency of shutdown due to filament fuzziness and breakage was 37 days/time. The diameter dispersion coefficient (Cv value) of the precursor fiber was 2.5%. The precursor fiber was characterized by small-angle X-ray scattering (SAXS), and the average radial size $L_P$ of the micropores was 1.65nm, and the aspect ratio $L/L_P$ of the micropores was 61.

(3) Preparation of carbon fiber: The polyacrylonitrile precursor fiber prepared in (2) above was subjected to heat stabilization treatment in the range of 180-280°C through 5 air atmosphere heating furnaces, to obtain pre-oxidized fiber. The temperatures of these 5 air atmosphere heating furnaces were 181°C, 222°C, 234° C, 252 °C, and 273°C respectively. The total heating time was 62 min, and the total draft was 2.2%. The obtained pre-oxidized fiber was subjected to low-temperature carbonization and high-temperature carbonization treatment in nitrogen to obtain carbon fiber. The low-temperature carbonization temperature was 300-700°C, the heat treatment time was 3.8 min, and the draft was 2.8%; the high-temperature carbonization temperature was 1000-1500°C, the heat treatment time was 1.8 min, and the draft was -2.8%. The micropores of the obtained carbon fiber were characterized by small angle X-ray scattering (SAXS). The average radial size $L_P$ of the micropores perpendicular to the fiber axis direction was 1.45nm, the aspect ratio $L/L_P$ of the micropore was 62, and the volume ratio of the micropores with radial size greater than 15 nm to the total micropore volume was 4.5%. The average diameter of the carbon fiber was 5μm, the diameter dispersion coefficient (Cv value) was 2.5%, the tensile strength was 5.7GPa, the tensile strength Cv value was 4.4%, the tensile modulus was 312GPa, and the tensile modulus $C_V$ value was 4.0%.

[Example 5]

(1) Preparation of dope: acrylonitrile was subjected to solution polymerization, DMF was used as solvent, and azobisisobutyronitrile was used as initiator. The total monomer concentration was 20.5wt%, the amount of initiator used was 0.34wt% of the total monomer mass. The comonomer was itaconic acid, and itaconic acid accounted for 1mol% of the total monomer mass. The polymerization temperature was controlled by three stages. Nitrogen was used for replacement before the polymerization temperature was raised, and the oxygen content in the polymerization kettle was 500ppm. The initial stage initiation temperature was 55°C, and the duration was 80min. The middle stage constant temperature polymerization temperature was 65°C, and the duration was 500min. The final stage cooling polymerization temperature was 40°C, and the duration was 200min. The crude dope obtained after the polymerization was subjected to de-monomerization and degassing treatment to obtain a polyacrylonitrile solution (dope), wherein the demonomerization pressure was 1.0 KPa A, the demonomerization feed temperature was 72, the demonomerization residence time was 60 min; the degassing pressure was 2.0 KPa A, the degassing feed temperature was 65°C, and the degassing residence time was 120 min. The solid content of the polyacrylonitrile solution was 18.0 wt%, and the zero shear viscosity of the solution measured at 50 °C was 55 Pa·s. The total number $Np$ of gel particles with a particle size greater than 0.15 μm in the polyacrylonitrile solution was 72324 particles/mL, the number of gel particles with a particle size greater than 5 μm accounted for 0.10% of the total number of gel particles, and the equilibrium swelling degree of the gel particles was 900%.

(2) Preparation of precursor fiber: The polyacrylonitrile solution prepared in the above (1) was metered by a metering pump, filtered by a sintered metal filter with a filter accuracy of 5μm, extruded through a spinneret and entered the first coagulation bath. The spinneret aperture was 55μm and the number of spinneret holes was 24,000. The temperature of the first coagulation bath was 35°C, the first coagulation bath was 80% dimethyl sulfoxide aqueous solution, and the draw ratio was -30%. After the nascent fiber was coagulated, it entered the second and third coagulation baths through a godet roller. The coagulation bath concentrations were 60% and 30%, respectively, the temperatures were 40°C and 60°C, respectively , and the draw ratios were 1.0 and 1.05, respectively. Then, it was drawn by hot water for 3 times, with the temperatures of 90°C, 92°C, and 95°C, respectively, and the draw ratios of 1.20, 1.41, and 2.0, respectively, and then washed by water for 9 times, with a step-by-step temperature increase, wherein the 1st to 3rd washing temperature was 50°C, the 4th to 6th washing temperature was 60°C, and the 7th to 9th washing temperature was 70°C. No drawing was performed during the washing stage. After that, the first oiling was performed, with a oil concentration of 1.2%, and the first drying and densification was performed, with a drying temperature of 95°C; then the second oiling was performed, with a oil concentration of 2.0% , and the second drying and densification was performed, with a drying temperature of 130°C. Then, the fiber was subjected to steam drawing, with a steam pressure of 0.35MPa and a steam draw ratio of 3.2. After that, the fiber was heat-set, with a heat-setting steam pressure of 0.1MPa. Finally, the fiber was winded to obtain carbon precursor fiber. During the coagulation process of the nascent fiber, there were few filament fuzziness and breakage, and the frequency of shutdown due to filament fuzziness and breakage was 35 days/time. The diameter dispersion coefficient (Cv value) of the precursor fiber was 2.5%. The precursor fiber was characterized by small-angle X-ray scattering (SAXS), and the average radial size $L_P$ of the micropores was 1.55nm, and the aspect ratio $L/L_P$ of the micropores was 60.

(3) Preparation of carbon fiber: The polyacrylonitrile precursor fiber prepared in (2) above was subjected to heat stabilization treatment in the range of 180-280°C through 5 air atmosphere heating furnaces, to obtain pre-oxidized fiber. The temperatures of these 5 air atmosphere heating furnaces were 181°C, 222°C, 234° C, 252 °C, and 273°C respectively. The total heating time was 62 min, and the total draft was 2.2%. The obtained pre-oxidized fiber was subjected to low-temperature carbonization and high-temperature carbonization treatment in nitrogen to obtain carbon fiber. The low-temperature carbonization temperature was 300-700°C, the heat treatment time was 3.8 min, and the draft was 2.8%; the high-temperature carbonization temperature was 1000-1500°C, the heat treatment time was 1.8 min, and the draft was -2.8%. The micropores of the obtained carbon fiber were characterized by small angle X-ray scattering (SAXS). The average radial size $L_P$ of the micropores perpendicular to the fiber axis direction was 1.46nm, the aspect ratio $L/L_P$ of the micropore was 63, and the volume ratio of the micropores with radial size greater than 15 nm to the total micropore volume was 4.6%. The average diameter of the carbon fiber was 7μm, the diameter dispersion coefficient (Cv value) was 2.6%, the tensile strength was 5.2GPa, the tensile strength Cv value was 4.7%, the tensile modulus was 289GPa, and the tensile modulus $C_V$ value was 4.6%.

[Example 6]

(1) Preparation of dope: acrylonitrile was subjected to solution polymerization, DMAC was used as solvent, and azobisisobutyronitrile was used as initiator. The total monomer concentration was 20.5wt%, the amount of initiator used was 0.34wt% of the total monomer mass. The comonomer was itaconic acid, and itaconic acid accounted for 1mol% of the total monomer mass. The polymerization temperature was controlled by three stages. Nitrogen was used for replacement before the polymerization temperature was raised, and the oxygen content in the polymerization kettle was 100ppm. The initial stage initiation temperature was 70°C, and the duration was 30min. The middle stage constant temperature polymerization temperature was 50°C, and the duration was 600min. The final stage cooling polymerization temperature was 30°C, and the duration was 150min. The crude dope obtained after the polymerization was subjected to de-monomerization and degassing treatment to obtain a polyacrylonitrile solution (dope), wherein the demonomerization pressure was 1.0 KPa A, the demonomerization feed temperature was 72, the demonomerization residence time was 60 min; the degassing pressure was 2.0 KPa A, the degassing feed temperature was 65°C, and the degassing residence time was 120 min. The solid content of the polyacrylonitrile solution was 22.0 wt%, and the zero shear viscosity of the solution measured at 50 °C was 162 Pa·s. The total number $Np$ of gel particles with a particle size greater than 0.15 μm in the polyacrylonitrile solution was 60128 particles/mL, the number of gel particles with a particle size greater than 5 μm accounted for 0.08% of the total number of gel particles, and the equilibrium swelling degree of the gel particles was 2000%.

(2) Preparation of precursor fiber: The polyacrylonitrile solution prepared in the above (1) was metered by a metering pump, filtered by a sintered metal filter with a filter accuracy of 5μm, extruded through a spinneret and entered the first coagulation bath. The spinneret aperture was 55μm and the number of spinneret holes was 3000. The temperature of the first coagulation bath was 35°C, the first coagulation bath was 80% dimethyl sulfoxide aqueous solution, and the draw ratio was -30%. After the nascent fiber was coagulated, it entered the second and third coagulation baths through a godet roller. The coagulation bath concentrations were 60% and 30%, respectively, the temperatures were 40°C and 60°C, respectively , and the draw ratios were 1.0 and 1.05, respectively. Then, it was drawn by hot water for 3 times, with the temperatures of 90°C, 92°C, and 95°C, respectively, and the draw ratios of 1.20, 1.41, and 2.0, respectively, and then washed by water for 9 times, with a step-by-step temperature increase, wherein the 1st to 3rd washing temperature was 50°C, the 4th to 6th washing temperature was 60°C, and the 7th to 9th washing temperature was 70°C. No drawing was performed during the washing stage. After that, the first oiling was performed, with a oil concentration of 1.2%, and the first drying and densification was performed, with a drying temperature of 95°C; then the second oiling was performed, with a oil concentration of 2.0% , and the second drying and densification was performed, with a drying temperature of 130°C. Then, the fiber was subjected to steam drawing, with a steam pressure of 0.35MPa and a steam draw ratio of 3.2. After that, the fiber was heat-set, with a heat-setting steam pressure of 0.1MPa. Finally, the fiber was winded to obtain carbon precursor fiber. During the coagulation process of the nascent fiber, there were few filament fuzziness and breakage, and the frequency of shutdown due to filament fuzziness and breakage was 48days/time. The diameter dispersion coefficient (Cv value) of the precursor fiber was 2.1%. The precursor fiber was characterized by small-angle X-ray scattering (SAXS), and the average radial size $L_P$ of the micropores was 1.42nm, and the aspect ratio $L/L_P$ of the micropores was 65.

(3) Preparation of carbon fiber: The polyacrylonitrile precursor fiber prepared in (2) above was subjected to heat stabilization treatment in the range of 180-280°C through 5 air atmosphere heating furnaces, to obtain pre-oxidized fiber. The temperatures of these 5 air atmosphere heating furnaces were 181°C, 222°C, 234° C, 252 °C, and 273°C respectively. The total heating time was 62 min, and the total draft was 2.2%. The obtained pre-oxidized fiber was subjected to low-temperature carbonization and high-temperature carbonization treatment in nitrogen to obtain carbon fiber. The low-temperature carbonization temperature was 300-700°C, the heat treatment time was 3.8 min, and the draft was 2.8%; the high-temperature carbonization temperature was 1000-1500°C, the heat treatment time was 1.8 min, and the draft was -2.8%. The micropores of the obtained carbon fiber were characterized by small angle X-ray scattering (SAXS). The average radial size $L_P$ of the micropores perpendicular to the fiber axis direction was 1.37nm, the aspect ratio $L/L_P$ of the micropore was 66, and the volume ratio of the micropores with radial size greater than 15 nm to the total micropore volume was 4.7%. The average diameter of the carbon fiber was 6μm, the diameter dispersion coefficient (Cv value) was 2.4%, the tensile strength was 5.8GPa, the tensile strength Cv value was 2.5%, the tensile modulus was 323GPa, and the tensile modulus $C_V$ value was 2.3%.

[Example 7]

(1) Preparation of dope: acrylonitrile was subjected to solution polymerization, DMF was used as solvent, and azobisisobutyronitrile was used as initiator. The total monomer concentration was 20.5wt%, the amount of initiator used was 0.34wt% of the total monomer mass. The comonomer was itaconic acid, and itaconic acid accounted for 1mol% of the total monomer mass. The polymerization temperature was controlled by three stages. Nitrogen was used for replacement before the polymerization temperature was raised, and the oxygen content in the polymerization kettle was 1500ppm. The initial stage initiation temperature was 55°C, and the duration was 80min. The middle stage constant temperature polymerization temperature was 65°C, and the duration was 500min. The final stage cooling polymerization temperature was 30°C, and the duration was 200min. The crude dope obtained after the polymerization was subjected to de-monomerization and degassing treatment to obtain a polyacrylonitrile solution (dope), wherein the demonomerization pressure was 1.0 KPa A, the demonomerization feed temperature was 72, the demonomerization residence time was 60 min; the degassing pressure was 2.0 KPa A, the degassing feed temperature was 65°C, and the degassing residence time was 120 min. The solid content of the polyacrylonitrile solution was 18.0 wt%, and the zero shear viscosity of the solution measured at 50 °C was 48 Pa·s. The total number $Np$ of gel particles with a particle size greater than 0.15 $\mu$m in the polyacrylonitrile solution was 78630 particles/mL, the number of gel particles with a particle size greater than 5 $\mu$m accounted for 0.13% of the total number of gel particles, and the equilibrium swelling degree of the gel particles was 480%.

(2) Preparation of precursor fiber: The polyacrylonitrile solution prepared in the above (1) was metered by a metering pump, filtered by a sintered metal filter with a filter accuracy of 5$\mu$m, extruded through a spinneret and entered the first coagulation bath. The spinneret aperture was 55$\mu$m and the number of spinneret holes was 24,000. The temperature of the first coagulation bath was 35°C, the first coagulation bath was 80% dimethyl sulfoxide aqueous solution, and the draw ratio was -30%. After the nascent fiber was coagulated, it entered the second and third coagulation baths through a godet roller. The coagulation bath concentrations were 60% and 30%, respectively, the temperatures were 40°C and 60°C, respectively , and the draw ratios were 1.0 and 1.05, respectively. Then, it was drawn by hot water for 3 times, with the temperatures of 90°C, 92°C, and 95°C, respectively, and the draw ratios of 1.20, 1.41, and 2.0, respectively, and then washed by water for 9 times, with a step-by-step temperature increase, wherein the 1st to 3rd washing temperature was 50°C, the 4th to 6th washing temperature was 60°C, and the 7th to 9th washing temperature was 70°C. No drawing was performed during the washing stage. After that, the first oiling was performed, with a oil concentration of 1.2%, and the first drying and densification was performed, with a drying temperature of 95°C; then the second oiling was performed, with a oil concentration of 2.0% , and the second drying and densification was performed, with a drying temperature of 130°C. Then, the fiber was subjected to steam drawing, with a steam pressure of 0.35MPa and a steam draw ratio of 3.2. After that, the fiber was heat-set, with a heat-setting steam pressure of 0.1MPa. Finally, the fiber was winded to obtain carbon precursor fiber. During the coagulation process of the nascent fiber, there were few filament fuzziness and breakage, and the frequency of shutdown due to filament fuzziness and breakage was 35 days/time. The diameter dispersion coefficient (Cv value) of the precursor fiber was 2.8%. The precursor fiber was characterized by small-angle X-ray scattering (SAXS), and the average radial size $L_P$ of the micropores was 1.98nm, and the aspect ratio $L/L_P$ of the micropores was 48.

(3) Preparation of carbon fiber: The polyacrylonitrile precursor fiber prepared in (2) above was subjected to heat stabilization treatment in the range of 180-280°C through 5 air atmosphere heating furnaces, to obtain pre-oxidized fiber. The temperatures of these 5 air atmosphere heating furnaces were 181°C, 222°C, 234° C, 252 °C, and 273°C respectively. The total heating time was 62 min, and the total draft was 2.2%. The obtained pre-oxidized fiber was subjected to low-temperature carbonization and high-temperature carbonization treatment in nitrogen to obtain carbon fiber. The low-temperature carbonization temperature was 300-700°C, the heat treatment time was 3.8 min, and the draft was 2.8%; the high-temperature carbonization temperature was 1000-1500°C, the heat treatment time was 1.8 min, and the draft was -2.8%. The micropores of the obtained carbon fiber were characterized by small angle X-ray scattering (SAXS). The average radial size $L_P$ of the micropores perpendicular to the fiber axis direction was 1.83nm, the aspect ratio $L/L_P$ of the micropore was 52, and the volume ratio of the micropores with radial size greater than 15 nm to the total micropore volume was 9.3%. The average diameter of the carbon fiber was 7$\mu$m, the diameter dispersion coefficient (Cv value) was 2.8%, the tensile strength was 4.98GPa, the tensile strength Cv value was 4.9%, the tensile modulus was 292GPa, and the tensile modulus $C_V$ value was 4.7%.

[Example 8]

(1) Preparation of dope: acrylonitrile was subjected to solution polymerization, DMSO was used as solvent, and azobisisobutyronitrile was used as initiator. The total monomer concentration was 20.5wt%, the amount of initiator used was 0.34wt% of the total monomer mass. The comonomer was itaconic acid, and itaconic acid accounted for 1mol% of the total monomer mass. The polymerization temperature was controlled by three stages. Nitrogen was used for replacement before the polymerization temperature was raised, and the oxygen content in the polymerization kettle was 2500ppm. The initial stage initiation temperature was 55°C, and the duration was 120min. The middle stage constant temperature polymerization temperature was 65°C, and the duration was 550min. The final stage cooling polymerization temperature was 45°C, and the duration was 100min. The crude dope obtained after the polymerization was subjected to de-monomerization and degassing treatment to obtain a polyacrylonitrile solution (dope), wherein the demonomerization pressure was 1.0 KPa A, the demonomerization feed temperature was 72, the demonomerization residence time was 60 min; the degassing pressure was 2.0 KPa A, the degassing feed temperature was 65°C, and the degassing residence time was 120 min. The solid content of the polyacrylonitrile solution was 19.8wt%, and the zero shear viscosity of the solution measured at 50 °C was 96 Pa·s. The total number $Np$ of gel particles with a particle size greater than 0.15 $\mu$m in the polyacrylonitrile solution was 87339 particles/mL, the number of gel particles with a particle size greater than 5 $\mu$m accounted for 0.21% of the total number of gel particles, and the equilibrium swelling degree of the gel particles was 390%.

(2) Preparation of precursor fiber: The polyacrylonitrile solution prepared in the above (1) was metered by a metering pump, filtered by a sintered metal filter with a filter accuracy of 5$\mu$m, extruded through a spinneret and entered the first coagulation bath. The spinneret aperture was 55$\mu$m and the number of spinneret holes was 24,000. The temperature of the first coagulation bath was 35°C, the first coagulation bath was 80% dimethyl sulfoxide aqueous solution, and the draw ratio was -30%. After the nascent fiber was coagulated, it entered the second and third coagulation baths through a godet roller. The coagulation bath concentrations were 60% and 30%, respectively, the temperatures were 40°C and 60°C, respectively , and the draw ratios were 1.0 and 1.05, respectively. Then, it was drawn by hot water for 3 times, with the temperatures of 90°C, 92°C, and 95°C, respectively, and the draw ratios of 1.20, 1.41, and 2.0, respectively, and then washed by water for 9 times, with a step-by-step temperature increase, wherein the 1st to 3rd washing temperature was 50°C, the 4th to 6th washing temperature was 60°C, and the 7th to 9th washing temperature was 70°C. No drawing was performed during the washing stage. After that, the first oiling was performed, with a oil concentration of 1.2%, and the first drying and densification was performed, with a drying temperature of 95°C; then the second oiling was performed, with a oil concentration of 2.0% , and the second drying and densification was performed, with a drying temperature of 130°C. Then, the fiber was subjected to steam drawing, with a steam pressure of 0.35MPa and a steam draw ratio of 3.2. After that, the fiber was heat-set, with a heat-setting steam pressure of 0.1MPa. Finally, the fiber was winded to obtain carbon precursor fiber. During the coagulation process of the nascent fiber, there were few filament fuzziness and breakage, and the frequency of shutdown due to filament fuzziness and breakage was 33 days/time. The diameter dispersion coefficient (Cv value) of the precursor fiber was 2.9%. The precursor fiber was characterized by small-angle X-ray scattering (SAXS), and the average radial size $L_P$ of the micropores was 1.99nm, and the aspect ratio $L/L_P$ of the micropores was 46.

(3) Preparation of carbon fiber: The polyacrylonitrile precursor fiber prepared in (2) above was subjected to heat stabilization treatment in the range of 180-280°C through 5 air atmosphere heating furnaces, to obtain pre-oxidized fiber. The temperatures of these 5 air atmosphere heating furnaces were 181°C, 222°C, 234° C, 252 °C, and 273°C respectively. The total heating time was 62 min, and the total draft was 2.2%. The obtained pre-oxidized fiber was subjected to low-temperature carbonization and high-temperature carbonization treatment in nitrogen to obtain carbon fiber. The low-temperature carbonization temperature was 300-700°C, the heat treatment time was 3.8 min, and the draft was 2.8%; the high-temperature carbonization temperature was 1000-1500°C, the heat treatment time was 1.8 min, and the draft was -2.8%. The micropores of the obtained carbon fiber were characterized by small angle X-ray scattering (SAXS). The average radial size $L_P$ of the micropores perpendicular to the fiber axis direction was 1.96nm, the aspect ratio $L/L_P$ of the micropore was 50, and the volume ratio of the micropores with radial size greater than 15 nm to the total micropore volume was 9.5%. The average diameter of the carbon fiber was 7$\mu$m, the diameter dispersion coefficient (Cv value) was 2.8%, the tensile strength was 4.93GPa, the tensile strength Cv value was 4.9%, the tensile modulus was 289GPa, and the tensile modulus Cv value was 4.8%.

[Comparative Example 1]

(1) Preparation of dope: acrylonitrile was subjected to solution polymerization, DMF was used as solvent, and azobisisobutyronitrile was used as initiator. The total monomer concentration was 20.5wt%, the amount of initiator used was 0.34wt% of the total monomer mass. The comonomer was itaconic acid, and itaconic acid accounted for 1mol% of the total monomer mass. The polymerization temperature was controlled by two stages. Nitrogen was used for replacement before the polymerization temperature was raised, and the oxygen content in the polymerization kettle was 1500 ppm. The initial stage initiation temperature was 30°C, and the duration was 30min. The constant temperature polymerization temperature was 65°C, and the duration was 750min. The crude dope obtained after the polymerization was subjected to de-monomerization and degassing treatment to obtain a polyacrylonitrile solution (dope), wherein the demonomerization pressure was 1.0 KPa A, the demonomerization feed temperature was 72, the demonomerization residence time was 60 min; the degassing pressure was 2.0 KPa A, the degassing feed temperature was 65°C, and the degassing residence time was 120 min. The solid content of the polyacrylonitrile solution was 18.2 wt%, and the zero shear viscosity of the solution measured at 50 °C was 65 Pa·s. The total number $Np$ of gel particles with a particle size greater than 0.15 $\mu$m in the polyacrylonitrile solution was 112822 particles/mL, the number of gel particles with a particle size greater than 5 $\mu$m accounted for 0.65% of the total number of gel particles, and the equilibrium swelling degree of the gel particles was 180%.

(2) Preparation of precursor fiber: The polyacrylonitrile solution prepared in the above (1) was metered by a metering pump, filtered by a sintered metal filter with a filter accuracy of 5$\mu$m, extruded through a spinneret and entered the first coagulation bath. The spinneret aperture was 55$\mu$m and the number of spinneret holes was 24,000. The temperature of the first coagulation bath was 35°C, the first coagulation bath was 80% dimethyl sulfoxide aqueous solution, and the draw ratio was -30%. After the nascent fiber was coagulated, it entered the second and third coagulation baths through a godet roller. The coagulation bath concentrations were 60% and 30%, respectively, the temperatures were 40°C and 60°C, respectively , and the draw ratios were 1.0 and 1.05, respectively. Then, it was drawn by hot water for 3 times, with the temperatures of 90°C, 92°C, and 95°C, respectively, and the draw ratios of 1.20, 1.41, and 2.0, respectively, and then washed by water for 9 times, with a step-by-step temperature increase, wherein the 1st to 3rd washing temperature was 50°C, the 4th to 6th washing temperature was 60°C, and the 7th to 9th washing temperature was 70°C. No drawing was performed during the washing stage. After that, the first oiling was performed, with a oil concentration of 1.2%, and the first drying and densification was performed, with a drying temperature of 95°C; then the second oiling was performed, with a oil concentration of 2.0% , and the second drying and densification was performed, with a drying temperature of 130°C. Then, the fiber was subjected to steam drawing, with a steam pressure of 0.35MPa and a steam draw ratio of 3.2. After that, the fiber was heat-set, with a heat-setting steam pressure of 0.1MPa. Finally, the fiber was winded to obtain carbon precursor fiber. During the coagulation process of the nascent fiber, there were filament fuzziness and breakage, and the frequency of shutdown due to filament fuzziness and breakage was 20 days/time. The diameter dispersion coefficient (Cv value) of the precursor fiber was 3.8%. The precursor fiber was characterized by small-angle X-ray scattering (SAXS), and the average radial size $L_P$ of the micropores was 3.29 nm, and the aspect ratio $L/L_P$ of the micropores was 43.

(3) Preparation of carbon fiber: The polyacrylonitrile precursor fiber prepared in (2) above was subjected to heat stabilization treatment in the range of 180-280°C through 5 air atmosphere heating furnaces, to obtain pre-oxidized fiber. The temperatures of these 5 air atmosphere heating furnaces were 181°C, 222°C, 234° C, 252 °C, and 273°C respectively. The total heating time was 62 min, and the total draft was 2.2%. The obtained pre-oxidized fiber was subjected to low-temperature carbonization and high-temperature carbonization treatment in nitrogen to obtain carbon fiber. The low-temperature carbonization temperature was 300-700°C, the heat treatment time was 3.8 min, and the draft was 2.8%; the high-temperature carbonization temperature was 1000-1500°C, the heat treatment time was 1.8 min, and the draft was -2.8%. The micropores of the obtained carbon fiber were characterized by small angle X-ray scattering (SAXS). The average radial size $L_P$ of the micropores perpendicular to the fiber axis direction was 3.18 nm, the aspect ratio $L/L_P$ of the micropore was 39, and the volume ratio of the micropores with radial size greater than 15 nm to the total micropore volume was 12.4%. The average diameter of the carbon fiber was 7$\mu$m, the diameter dispersion coefficient (Cv value) was 3.6%, the tensile strength was 4.2GPa, the tensile strength Cv value was 6.5%, the tensile modulus was 257GPa, and the tensile modulus Cv value was 7.2%.

[Comparative Example 2]

(1) Preparation of dope: acrylonitrile was subjected to solution polymerization, DMSO was used as solvent, and azobisisobutyronitrile was used as initiator. The total monomer concentration was 20.5wt%, the amount of initiator used was 0.34wt% of the total monomer mass. The comonomer was itaconic acid, and itaconic acid accounted for 1mol% of the total monomer mass. The polymerization temperature was controlled by two stages. Nitrogen was used for replacement before the polymerization temperature was raised, and the oxygen content in the polymerization kettle was 680 ppm. The initial stage initiation temperature was 20°C, and the duration was 60min. The constant temperature polymerization temperature was 80°C, and the duration was 720min. The crude dope obtained after the polymerization was subjected to de-monomerization and degassing treatment to obtain a polyacrylonitrile solution (dope), wherein the demonomerization pressure was 1.0 KPa A, the demonomerization feed temperature was 72, the demonomerization residence time was 60 min; the degassing pressure was 2.0 KPa A, the degassing feed temperature was 65°C, and the degassing residence time was 120 min. The solid content of the polyacrylonitrile solution was 19.0 wt%, and the zero shear viscosity of the solution measured at 50 °C was 92 Pa·s. The total number $Np$ of gel particles with a particle size greater than 0.15 $\mu$m in the polyacrylonitrile solution was 134925 particles/mL, the number of gel particles with a particle size greater than 5 $\mu$m accounted for 0.87% of the total number of gel particles, and the equilibrium swelling degree of the gel particles was 120%.

(2) Preparation of precursor fiber: The polyacrylonitrile solution prepared in the above (1) was metered by a metering pump, filtered by a sintered metal filter with a filter accuracy of 5$\mu$m, extruded through a spinneret and entered the first coagulation bath. The spinneret aperture was 55$\mu$m and the number of spinneret holes was 12,000. The temperature of the first coagulation bath was 35°C, the first coagulation bath was 80% dimethyl sulfoxide aqueous solution, and the draw ratio was -30%. After the nascent fiber was coagulated, it entered the second and third coagulation baths through a godet roller. The coagulation bath concentrations were 60% and 30%, respectively, the temperatures were 40°C and 60°C, respectively , and the draw ratios were 1.0 and 1.05, respectively. Then, it was drawn by hot water for 3 times, with the temperatures of 90°C, 92°C, and 95°C, respectively, and the draw ratios of 1.20, 1.41, and 2.0, respectively, and then washed by water for 9 times, with a step-by-step temperature increase, wherein the 1st to 3rd washing temperature was 50°C, the 4th to 6th washing temperature was 60°C, and the 7th to 9th washing temperature was 70°C. No drawing was performed during the washing stage. After that, the first oiling was performed, with a oil concentration of 1.2%, and the first drying and densification was performed, with a drying temperature of 95°C; then the second oiling was performed, with a oil concentration of 2.0% , and the second drying and densification was performed, with a drying temperature of 130°C. Then, the fiber was subjected to steam drawing, with a steam pressure of 0.35MPa and a steam draw ratio of 3.2. After that, the fiber was heat-set, with a heat-setting steam pressure of 0.1MPa. Finally, the fiber was winded to obtain carbon precursor fiber. During the coagulation process of the nascent fiber, there were filament fuzziness and breakage, and the frequency of shutdown due to filament fuzziness and breakage was 23 days/time. The diameter dispersion coefficient (Cv value) of the precursor fiber was 6.7%. The precursor fiber was characterized by small-angle X-ray scattering (SAXS), and the average radial size $L_P$ of the micropores was 3.92 nm, and the aspect ratio $L/L_P$ of the micropores was 38.

(3) Preparation of carbon fiber: The polyacrylonitrile precursor fiber prepared in (2) above was subjected to heat stabilization treatment in the range of 180-280°C through 5 air atmosphere heating furnaces, to obtain pre-oxidized fiber. The temperatures of these 5 air atmosphere heating furnaces were 181°C, 222°C, 234° C, 252 °C, and 273°C respectively. The total heating time was 62 min, and the total draft was 2.2%. The obtained pre-oxidized fiber was subjected to low-temperature carbonization and high-temperature carbonization treatment in nitrogen to obtain carbon fiber. The low-temperature carbonization temperature was 300-700°C, the heat treatment time was 3.8 min, and the draft was 2.8%; the high-temperature carbonization temperature was 1000-1500°C, the heat treatment time was 1.8 min, and the draft was -2.8%. The micropores of the obtained carbon fiber were characterized by small angle X-ray scattering (SAXS). The average radial size $L_P$ of the micropores perpendicular to the fiber axis direction was 3.73 nm, the aspect ratio $L/L_P$ of the micropore was 43, and the volume ratio of the micropores with radial size greater than 15 nm to the total micropore volume was 16.3%. The average diameter of the carbon fiber was 5$\mu$m, the diameter dispersion coefficient (Cv value) was 7.5%, the tensile strength was 3.8GPa, the tensile strength Cv value was 6.5%, the tensile modulus was 233GPa, and the tensile modulus Cv value was 7.0%.

[Comparative Example 3]

(1) Preparation of dope: acrylonitrile was subjected to solution polymerization, DMAC was used as solvent, and azobisisobutyronitrile was used as initiator. The total monomer concentration was 20.5wt%, the amount of initiator used was 0.34wt% of the total monomer mass. The comonomer was itaconic acid, and itaconic acid accounted for 1mol% of the total monomer mass. The polymerization temperature was controlled by two stages. Nitrogen was used for replacement before the polymerization temperature was raised, and the oxygen content in the polymerization kettle was 340 ppm. The initial stage initiation temperature was 20°C, and the duration was 100min. The constant temperature polymerization temperature was 85°C, and the duration was 680min. The crude dope obtained after the polymerization was subjected to de-monomerization and degassing treatment to obtain a polyacrylonitrile solution (dope), wherein the demonomerization pressure was 1.0 KPa A, the demonomerization feed temperature was 72, the demonomerization residence time was 60 min; the degassing pressure was 2.0 KPa A, the degassing feed temperature was 65°C, and the degassing residence time was 120 min. The solid content of the polyacrylonitrile solution was 22.0 wt%, and the zero shear viscosity of the solution measured at 50 °C was 146 Pa·s. The total number $Np$ of gel particles with a particle size greater than 0.15 $\mu$m in the polyacrylonitrile solution was 170738 particles/mL, the number of gel particles with a particle size greater than 5 $\mu$m accounted for 1.2% of the total number of gel particles, and the equilibrium swelling degree of the gel particles was 100%.

(2) Preparation of precursor fiber: The polyacrylonitrile solution prepared in the above (1) was metered by a metering pump, filtered by a sintered metal filter with a filter accuracy of 5$\mu$m, extruded through a spinneret and entered the first coagulation bath. The spinneret aperture was 55$\mu$m and the number of spinneret holes was 3000. The temperature of the first coagulation bath was 35°C, the first coagulation bath was 80% dimethyl sulfoxide aqueous solution, and the draw ratio was -30%. After the nascent fiber was coagulated, it entered the second and third coagulation baths through a godet roller. The coagulation bath concentrations were 60% and 30%, respectively, the temperatures were 40°C and 60°C, respectively , and the draw ratios were 1.0 and 1.05, respectively. Then, it was drawn by hot water for 3 times, with the temperatures of 90°C, 92°C, and 95°C, respectively, and the draw ratios of 1.20, 1.41, and 2.0, respectively, and then washed by water for 9 times, with a step-by-step temperature increase, wherein the 1st to 3rd washing temperature was 50°C, the 4th to 6th washing temperature was 60°C, and the 7th to 9th washing temperature was 70°C. No drawing was performed during the washing stage. After that, the first oiling was performed, with a oil concentration of 1.2%, and the first drying and densification was performed, with a drying temperature of 95°C; then the second oiling was performed, with a oil concentration of 2.0% , and the second drying and densification was performed, with a drying temperature of 130°C. Then, the fiber was subjected to steam drawing, with a steam pressure of 0.35MPa and a steam draw ratio of 3.2. After that, the fiber was heat-set, with a heat-setting steam pressure of 0.1MPa. Finally, the fiber was winded to obtain carbon precursor fiber. During the coagulation process of the nascent fiber, there were filament fuzziness and breakage, and the frequency of shutdown due to filament fuzziness and breakage was 18 days/time. The diameter dispersion coefficient (Cv value) of the precursor fiber was 7.6%. The precursor fiber was characterized by small-angle X-ray scattering (SAXS), and the average radial size $L_P$ of the micropores was 4.62 nm, and the aspect ratio $L/L_P$ of the micropores was 35.

(3) Preparation of carbon fiber: The polyacrylonitrile precursor fiber prepared in (2) above was subjected to heat stabilization treatment in the range of 180-280°C through 5 air atmosphere heating furnaces, to obtain pre-oxidized fiber. The temperatures of these 5 air atmosphere heating furnaces were 181°C, 222°C, 234° C, 252 °C, and 273°C respectively. The total heating time was 62 min, and the total draft was 2.2%. The obtained pre-oxidized fiber was subjected to low-temperature carbonization and high-temperature carbonization treatment in nitrogen to obtain carbon fiber. The low-temperature carbonization temperature was 300-700°C, the heat treatment time was 3.8 min, and the draft was 2.8%; the high-temperature carbonization temperature was 1000-1500°C, the heat treatment time was 1.8 min, and the draft was -2.8%. The micropores of the obtained carbon fiber were characterized by small angle X-ray scattering (SAXS). The average radial size $L_P$ of the micropores perpendicular to the fiber axis direction was 3.92 nm, the aspect ratio $L/L_P$ of the micropore was 39, and the volume ratio of the micropores with radial size greater than 15 nm to the total micropore volume was 15.5%. The average diameter of the carbon fiber was 6$\mu$m, the diameter dispersion coefficient (Cv value) was 6.4%, the tensile strength was 3.8GPa, the tensile strength Cv value was 6.5%, the tensile modulus was 256GPa, and the tensile modulus Cv value was 6.3%.

[Comparative Example 4]

(1) Preparation of dope: acrylonitrile was subjected to solution polymerization, DMSO was used as solvent, and azobisisobutyronitrile was used as initiator. The monomer concentration was 20.5wt%, the amount of initiator used was 0.34wt% of the total monomer mass. The comonomer was itaconic acid, and itaconic acid accounted for 1mol% of the total monomer mass. The polymerization temperature was controlled by three stages. Nitrogen was used for replacement before the polymerization temperature was raised, and the oxygen content in the polymerization kettle was 2500ppm. The initial stage initiation temperature was 25°C, and the duration was 120min. The middle stage constant temperature polymerization temperature was 80°C, and the duration was 640min. The final stage polymerization temperature was 65°C, and the duration was 120min. The crude dope obtained after the polymerization was subjected to de-monomerization and degassing treatment to obtain a polyacrylonitrile solution (dope), wherein the demonomerization pressure was 1.0 KPa A, the demonomerization feed temperature was 72, the demonomerization residence time was 60 min; the degassing pressure was 2.0 KPa A, the degassing feed temperature was 65°C, and the degassing residence time was 120 min. The solid content of the polyacrylonitrile solution was 18.6 wt%, and the zero shear viscosity of the solution measured at 50 °C was 78 Pa·s. The total number $Np$ of gel particles with a particle size greater than 0.15 $\mu$m in the polyacrylonitrile solution was 125990 particles/mL, the number of gel particles with a particle size greater than 5 $\mu$m accounted for 0.96% of the total number of gel particles, and the equilibrium swelling degree of the gel particles was 150%.

(2) Preparation of precursor fiber: The polyacrylonitrile solution prepared in the above (1) was metered by a metering pump, filtered by a sintered metal filter with a filter accuracy of 5$\mu$m, extruded through a spinneret and entered the first coagulation bath. The spinneret aperture was 55$\mu$m and the number of spinneret holes was 12,000. The temperature of the first coagulation bath was 35°C, the first coagulation bath was 80% dimethyl sulfoxide aqueous solution, and the draw ratio was -30%. After the nascent fiber was coagulated, it entered the second and third coagulation baths through a godet roller. The coagulation bath concentrations were 60% and 30%, respectively, the temperatures were 40°C and 60°C, respectively, and the draw ratios were 1.0 and 1.05, respectively. Then, it was drawn by hot water for 3 times, with the temperatures of 90°C, 92°C, and 95°C, respectively, and the draw ratios of 1.20, 1.41, and 2.0, respectively, and then washed by water for 9 times, with a step-by-step temperature increase, wherein the 1st to 3rd washing temperature was 50°C, the 4th to 6th washing temperature was 60°C, and the 7th to 9th washing temperature was 70°C. No drawing was performed during the washing stage. After that, the first oiling was performed, with a oil concentration of 1.2%, and the first drying and densification was performed, with a drying temperature of 95°C; then the second oiling was performed, with a oil concentration of 2.0% , and the second drying and densification was performed, with a drying temperature of 130°C. Then, the fiber was subjected to steam drawing, with a steam pressure of 0.35MPa and a steam draw ratio of 3.2. After that, the fiber was heat-set, with a heat-setting steam pressure of 0.1MPa. Finally, the fiber was winded to obtain carbon precursor fiber. During the coagulation process of the nascent fiber, there were filament fuzziness and breakage, and the frequency of shutdown due to filament fuzziness and breakage was 19 days/time. The diameter dispersion coefficient (Cv value) of the precursor fiber was 2.7%. The precursor fiber was characterized by small-angle X-ray scattering (SAXS), and the average radial size $L_P$ of the micropores was 3.35 nm, and the aspect ratio $L/L_P$ of the micropores was 38.

(3) Preparation of carbon fiber: The polyacrylonitrile precursor fiber prepared in (2) above was subjected to heat stabilization treatment in the range of 180-280°C through 5 air atmosphere heating furnaces, to obtain pre-oxidized fiber. The temperatures of these 5 air atmosphere heating furnaces were 181°C, 222°C, 234° C, 252 °C, and 273°C respectively. The total heating time was 62 min, and the total draft was 2.2%. The obtained pre-oxidized fiber was subjected to low-temperature carbonization and high-temperature carbonization treatment in nitrogen to obtain carbon fiber. The low-temperature carbonization temperature was 300-700°C, the heat treatment time was 3.8 min, and the draft was 2.8%; the high-temperature carbonization temperature was 1000-1500°C, the heat treatment time was 1.8 min, and the draft was -2.8%. The micropores of the obtained carbon fiber were characterized by small angle X-ray scattering (SAXS). The average radial size $L_P$ of the micropores perpendicular to the fiber axis direction was 3.65nm, the aspect ratio $L/L_P$ of the micropore was 40, and the volume ratio of the micropores with radial size greater than 15 nm to the total micropore volume was 12.1%. The average diameter of the carbon fiber was 5 $\mu$m, the diameter dispersion coefficient (Cv value) was 6.5%, the tensile strength was 4.06GPa, the tensile strength Cv value was 7.5%, the tensile modulus was 233GPa, and the tensile modulus Cv value was 6.0%.

[Comparative Example 5]

(1) Preparation of dope: acrylonitrile was subjected to solution polymerization, DMSO was used as solvent, and azobisisobutyronitrile was used as initiator. The monomer concentration was 20.5wt%, the amount of initiator used was 0.34wt% of the total monomer mass. The comonomer was itaconic acid, and itaconic acid accounted for 1mol% of the total monomer mass. The polymerization temperature was controlled by three stages. Nitrogen was used for replacement before the polymerization temperature was raised, and the oxygen content in the polymerization kettle was 600 ppm. The initial stage initiation temperature was 40°C, and the duration was 60min. The middle stage constant temperature polymerization temperature was 75 °C, and the duration was 600min. The final stage polymerization temperature was 65°C, and the duration was 120min. The crude dope obtained after the polymerization was subjected to de-monomerization and degassing treatment to obtain a polyacrylonitrile solution (dope), wherein the demonomerization pressure was 1.0 KPa A, the demonomerization feed temperature was 72, the demonomerization residence time was 60 min; the degassing pressure was 2.0 KPa A, the degassing feed temperature was 65°C, and the degassing residence time was 120 min. The solid content of the polyacrylonitrile solution was 19.8 wt%, and the zero shear viscosity of the solution measured at 50 °C was 97 Pa·s. The total number $Np$ of gel particles with a particle size greater than 0.15 $\mu$m in the polyacrylonitrile solution was 121440 particles/mL, the number of gel particles with a particle size greater than 5 $\mu$m accounted for 0.85% of the total number of gel particles, and the equilibrium swelling degree of the gel particles was 200%.

(2) Preparation of precursor fiber: The polyacrylonitrile solution prepared in the above (1) was metered by a metering pump, filtered by a sintered metal filter with a filter accuracy of 5$\mu$m, extruded through a spinneret and entered the first coagulation bath. The spinneret aperture was 55$\mu$m and the number of spinneret holes was 12,000. The temperature of the first coagulation bath was 35°C, the first coagulation bath was 80% dimethyl sulfoxide aqueous solution, and the draw ratio was -30%. After the nascent fiber was coagulated, it entered the second and third coagulation baths through a godet roller. The coagulation bath concentrations were 60% and 30%, respectively, the temperatures were 40°C and 60°C, respectively , and the draw ratios were 1.0 and 1.05, respectively. Then, it was drawn by hot water for 3 times, with the temperatures of 90°C, 92°C, and 95°C, respectively, and the draw ratios of 1.20, 1.41, and 2.0, respectively, and then washed by water for 9 times, with a step-by-step temperature increase, wherein the 1st to 3rd washing temperature was 50°C, the 4th to 6th washing temperature was 60°C, and the 7th to 9th washing temperature was 70°C. No drawing was performed during the washing stage. After that, the first oiling was performed, with a oil concentration of 1.2%, and the first drying and densification was performed, with a drying temperature of 95°C; then the second oiling was performed, with a oil concentration of 2.0% , and the second drying and densification was performed, with a drying temperature of 130°C. Then, the fiber was subjected to steam drawing, with a steam pressure of 0.35MPa and a steam draw ratio of 3.2. After that, the fiber was heat-set, with a heat-setting steam pressure of 0.1MPa. Finally, the fiber was winded to obtain carbon precursor fiber. During the coagulation process of the nascent fiber, there were filament fuzziness and breakage, and the frequency of shutdown due to filament fuzziness and breakage was 23 days/time. The diameter dispersion coefficient (Cv value) of the precursor fiber was 2.6%. The precursor fiber was characterized by small-angle X-ray scattering (SAXS), and the average radial size $L_P$ of the micropores was 3.25 nm, and the aspect ratio $L/L_P$ of the micropores was 41.

(3) Preparation of carbon fiber: The polyacrylonitrile precursor fiber prepared in (1) above was subjected to heat stabilization treatment in the range of 180-280°C through 5 air atmosphere heating furnaces, to obtain pre-oxidized fiber. The temperatures of these 5 air atmosphere heating furnaces were 181°C, 222°C, 234° C, 252 °C, and 273°C respectively. The total heating time was 62 min, and the total draft was 2.2%. The obtained pre-oxidized fiber was subjected to low-temperature carbonization and high-temperature carbonization treatment in nitrogen to obtain carbon fiber. The low-temperature carbonization temperature was 300-700°C, the heat treatment time was 3.8 min, and the draft was 2.8%; the high-temperature carbonization temperature was 1000-1500°C, the heat treatment time was 1.8 min, and the draft was -2.8%. The micropores of the obtained carbon fiber were characterized by small angle X-ray scattering (SAXS). The average radial size $L_P$ of the micropores perpendicular to the fiber axis direction was 2.79 nm, the aspect ratio $L/L_P$ of the micropore was 45, and the volume ratio of the micropores with radial size greater than 15 nm to the total micropore volume was 12.3%. The average diameter of the carbon fiber was 5$\mu$m, the diameter dispersion coefficient (Cv value) was 6.9%, the tensile strength was 4.10 GPa, the tensile strength Cv value was 7.3 %, the tensile modulus was 238 GPa, and the tensile modulus Cv value was 6.0%.

[Comparative Example 6]

(1) Preparation of dope: acrylonitrile was subjected to solution polymerization, DMSO was used as solvent, and azobisisobutyronitrile was used as initiator. The monomer concentration was 21.5wt%, the amount of initiator used was 0.45 wt% of the total monomer mass. The comonomer was itaconic acid, and itaconic acid accounted for 1mol% of the total monomer mass. The polymerization temperature was controlled by three stages. Nitrogen was used for replacement before the polymerization temperature was raised, and the oxygen content in the polymerization kettle was 340 ppm. The initial stage initiation temperature was 20°C, and the duration was 100 min. The middle stage constant temperature polymerization temperature was 85 °C, and the duration was 550 min. The final stage polymerization temperature was 45°C, and the duration was 120min. The crude dope obtained after the polymerization was subjected to de-monomerization and degassing treatment to obtain a polyacrylonitrile solution (dope), wherein the demonomerization pressure was 1.0 KPa A, the demonomerization feed temperature was 72, the demonomerization residence time was 60 min; the degassing pressure was 2.0 KPa A, the degassing feed temperature was 65°C, and the degassing residence time was 120 min. The solid content of the polyacrylonitrile solution was 22.0 wt%, and the zero shear viscosity of the solution measured at 50 °C was 146 Pa·s. The total number $Np$ of gel particles with a particle size greater than 0.15 $\mu$m in the polyacrylonitrile solution was 119380 particles/mL, the number of gel particles with a particle size greater than 5 $\mu$m accounted for 0.83% of the total number of gel particles, and the equilibrium swelling degree of the gel particles was 260%.

(2) Preparation of precursor fiber: The polyacrylonitrile solution prepared in the above (1) was metered by a metering pump, filtered by a sintered metal filter with a filter accuracy of 5$\mu$m, extruded through a spinneret and entered the first coagulation bath. The spinneret aperture was 55$\mu$m and the number of spinneret holes was 12,000. The temperature of the first coagulation bath was 35°C, the first coagulation bath was 80% dimethyl sulfoxide aqueous solution, and the draw ratio was -30%. After the nascent fiber was coagulated, it entered the second and third coagulation baths through a godet roller. The coagulation bath concentrations were 60% and 30%, respectively, the temperatures were 40°C and 60°C, respectively , and the draw ratios were 1.0 and 1.05, respectively. Then, it was drawn by hot water for 3 times, with the temperatures of 90°C, 92°C, and 95°C, respectively, and the draw ratios of 1.20, 1.41, and 2.0, respectively, and then washed by water for 9 times, with a step-by-step temperature increase, wherein the 1st to 3rd washing temperature was 50°C, the 4th to 6th washing temperature was 60°C, and the 7th to 9th washing temperature was 70°C. No drawing was performed during the washing stage. After that, the first oiling was performed, with a oil concentration of 1.2%, and the first drying and densification was performed, with a drying temperature of 95°C; then the second oiling was performed, with a oil concentration of 2.0% , and the second drying and densification was performed, with a drying temperature of 130°C. Then, the fiber was subjected to steam drawing, with a steam pressure of 0.35MPa and a steam draw ratio of 3.2. After that, the fiber was heat-set, with a heat-setting steam pressure of 0.1MPa. Finally, the fiber was winded to obtain carbon precursor fiber. During the coagulation process of the nascent fiber, there were filament fuzziness and breakage, and the frequency of shutdown due to filament fuzziness and breakage was 21 days/time. The diameter dispersion coefficient (Cv value) of the precursor fiber was 2.9%. The precursor fiber was characterized by small-angle X-ray scattering (SAXS), and the average radial size $L_P$ of the micropores was 3.16 nm, and the aspect ratio $L/L_P$ of the micropores was 44.

(3) Preparation of carbon fiber: The polyacrylonitrile precursor fiber prepared in (2) above was subjected to heat stabilization treatment in the range of 180-280°C through 5 air atmosphere heating furnaces, to obtain pre-oxidized fiber. The temperatures of these 5 air atmosphere heating furnaces were 181°C, 222°C, 234° C, 252 °C, and 273°C respectively. The total heating time was 62 min, and the total draft was 2.2%. The obtained pre-oxidized fiber was subjected to low-temperature carbonization and high-temperature carbonization treatment in nitrogen to obtain carbon fiber. The low-temperature carbonization temperature was 300-700°C, the heat treatment time was 3.8 min, and the draft was 2.8%; the high-temperature carbonization temperature was 1000-1500°C, the heat treatment time was 1.8 min, and the draft was -2.8%. The micropores of the obtained carbon fiber were characterized by small angle X-ray scattering (SAXS). The average radial size $L_P$ of the micropores perpendicular to the fiber axis direction was 2.56 nm, the aspect ratio $L/L_P$ of the micropore was 47, and the volume ratio of the micropores with radial size greater than 15 nm to the total micropore volume was 11.5 %. The average diameter of the carbon fiber was 5$\mu$m, the diameter dispersion coefficient (Cv value) was 6.9%, the tensile strength was 4.32GPa, the tensile strength Cv value was 6.8%, the tensile modulus was 248GPa, and the tensile modulus Cv value was 5.5%.

[Comparative Example 7]

(1) Preparation of dope: acrylonitrile was subjected to solution polymerization, DMSO was used as solvent, and azobisisobutyronitrile was used as initiator. The monomer concentration was 20.5wt%, the amount of initiator used was 0.34wt% of the total monomer mass. The comonomer was itaconic acid, and itaconic acid accounted for 1mol% of the total monomer mass. The polymerization temperature was controlled by three stages. Nitrogen was used for replacement before the polymerization temperature was raised, and the oxygen content in the polymerization kettle was 600 ppm. The initial stage initiation temperature was 50 °C, and the duration was 60min. The middle stage constant temperature polymerization temperature was 45 °C, and the duration was 200 min. The final stage cooling polymerization temperature was 75°C, and the duration was 550min. The crude dope obtained after the polymerization was subjected to de-monomerization and degassing treatment to obtain a polyacrylonitrile solution (dope), wherein the demonomerization pressure was 1.0 KPa A, the demonomerization feed temperature was 72, the demonomerization residence time was 60 min; the degassing pressure was 2.0 KPa A, the degassing feed temperature was 65°C, and the degassing residence time was 120 min. The solid content of the polyacrylonitrile solution was 19.8 wt%, and the zero shear viscosity of the solution measured at 50 °C was 112 Pa·s. The total number $Np$ of gel particles with a particle size greater than 0.15 $\mu$m in the polyacrylonitrile solution was 123650 particles/mL, the number of gel particles with a particle size greater than 5 $\mu$m accounted for 0.89% of the total number of gel particles, and the equilibrium swelling degree of the gel particles was 190%.

(2) Preparation of precursor fiber: The polyacrylonitrile solution prepared in the above (1) was metered by a metering pump, filtered by a sintered metal filter with a filter accuracy of 5$\mu$m, extruded through a spinneret and entered the first coagulation bath. The spinneret aperture was 55$\mu$m and the number of spinneret holes was 12,000. The temperature of the first coagulation bath was 35°C, the first coagulation bath was 80% dimethyl sulfoxide aqueous solution, and the draw ratio was -30%. After the nascent fiber was coagulated, it entered the second and third coagulation baths through a godet roller. The coagulation bath concentrations were 60% and 30%, respectively, the temperatures were 40°C and 60°C, respectively , and the draw ratios were 1.0 and 1.05, respectively. Then, it was drawn by hot water for 3 times, with the temperatures of 90°C, 92°C, and 95°C, respectively, and the draw ratios of 1.20, 1.41, and 2.0, respectively, and then washed by water for 9 times, with a step-by-step temperature increase, wherein the 1st to 3rd washing temperature was 50°C, the 4th to 6th washing temperature was 60°C, and the 7th to 9th washing temperature was 70°C. No drawing was performed during the washing stage. After that, the first oiling was performed, with a oil concentration of 1.2%, and the first drying and densification was performed, with a drying temperature of 95°C; then the second oiling was performed, with a oil concentration of 2.0% , and the second drying and densification was performed, with a drying temperature of 130°C. Then, the fiber was subjected to steam drawing, with a steam pressure of 0.35MPa and a steam draw ratio of 3.2. After that, the fiber was heat-set, with a heat-setting steam pressure of 0.1MPa. Finally, the fiber was winded to obtain carbon precursor fiber. During the coagulation process of the nascent fiber, there were filament fuzziness and breakage, and the frequency of shutdown due to filament fuzziness and breakage was 21 days/time. The diameter dispersion coefficient (Cv value) of the precursor fiber was 2.9%. The precursor fiber was characterized by small-angle X-ray scattering (SAXS), and the average radial size $L_P$ of the micropores was 3.35nm, and the aspect ratio $L/L_P$ of the micropores was 39.

(3) Preparation of carbon fiber: The polyacrylonitrile precursor fiber prepared in (2) above was subjected to heat stabilization treatment in the range of 180-280°C through 5 air atmosphere heating furnaces, to obtain pre-oxidized fiber. The temperatures of these 5 air atmosphere heating furnaces were 181°C, 222°C, 234° C, 252 °C, and 273°C respectively. The total heating time was 62 min, and the total draft was 2.2%. The obtained pre-oxidized fiber was subjected to low-temperature carbonization and high-temperature carbonization treatment in nitrogen to obtain carbon fiber. The low-temperature carbonization temperature was 300-700°C, the heat treatment time was 3.8 min, and the draft was 2.8%; the high-temperature carbonization temperature was 1000-1500°C, the heat treatment time was 1.8 min, and the draft was -2.8%. The micropores of the obtained carbon fiber were characterized by small angle X-ray scattering (SAXS). The average radial size $L_P$ of the micropores perpendicular to the fiber axis direction was 3.26nm, the aspect ratio $L/L_P$ of the micropore was 41, and the volume ratio of the micropores with radial size greater than 15 nm to the total micropore volume was 12.6%. The average diameter of the carbon fiber was 5$\mu$m, the diameter dispersion coefficient (Cv value) was 7.0%, the tensile strength was 4.12GPa, the tensile strength Cv value was 6.6%, the tensile modulus was 237GPa, and the tensile modulus Cv value was 6.5%.

[Comparative Example 8]

(1) Preparation of dope: acrylonitrile was subjected to solution polymerization, DMSO was used as solvent, and azobisisobutyronitrile was used as initiator. The monomer concentration was 20.5wt%, the amount of initiator used was 0.34wt% of the total monomer mass. The comonomer was itaconic acid, and itaconic acid accounted for 1mol% of the total monomer mass. The polymerization temperature was controlled by three stages. Nitrogen was used for replacement before the polymerization temperature was raised, and the oxygen content in the polymerization kettle was 600 ppm. The initial stage initiation temperature was 40°C, and the duration was 60min. The middle stage constant temperature polymerization temperature was 65 °C, and the duration was 450 min. The final stage polymerization temperature was 75 °C, and the duration was 250min. The crude dope obtained after the polymerization was subjected to de-monomerization and degassing treatment to obtain a polyacrylonitrile solution (dope), wherein the demonomerization pressure was 1.0 KPa A, the demonomerization feed temperature was 72, the demonomerization residence time was 60 min; the degassing pressure was 2.0 KPa A, the degassing feed temperature was 65°C, and the degassing residence time was 120 min. The solid content of the polyacrylonitrile solution was 19.8 wt%, and the zero shear viscosity of the solution measured at 50 °C was 134 Pa·s. The total number $Np$ of gel particles with a particle size greater than 0.15 $\mu$m in the polyacrylonitrile solution was 123920 particles/mL, the number of gel particles with a particle size greater than 5 μm accounted for 0.92% of the total number of gel particles, and the equilibrium swelling degree of the gel particles was 180%.

(2) Preparation of precursor fiber: The polyacrylonitrile solution prepared in the above (1) was metered by a metering pump, filtered by a sintered metal filter with a filter accuracy of 5μm, extruded through a spinneret and entered the first coagulation bath. The spinneret aperture was 55μm and the number of spinneret holes was 12,000. The temperature of the first coagulation bath was 35°C, the first coagulation bath was 80% dimethyl sulfoxide aqueous solution, and the draw ratio was -30%. After the nascent fiber was coagulated, it entered the second and third coagulation baths through a godet roller. The coagulation bath concentrations were 60% and 30%, respectively, the temperatures were 40°C and 60°C, respectively , and the draw ratios were 1.0 and 1.05, respectively. Then, it was drawn by hot water for 3 times, with the temperatures of 90°C, 92°C, and 95°C, respectively, and the draw ratios of 1.20, 1.41, and 2.0, respectively, and then washed by water for 9 times, with a step-by-step temperature increase, wherein the 1st to 3rd washing temperature was 50°C, the 4th to 6th washing temperature was 60°C, and the 7th to 9th washing temperature was 70°C. No drawing was performed during the washing stage. After that, the first oiling was performed, with a oil concentration of 1.2%, and the first drying and densification was performed, with a drying temperature of 95°C; then the second oiling was performed, with a oil concentration of 2.0% , and the second drying and densification was performed, with a drying temperature of 130°C. Then, the fiber was subjected to steam drawing, with a steam pressure of 0.35MPa and a steam draw ratio of 3.2. After that, the fiber was heat-set, with a heat-setting steam pressure of 0.1MPa. Finally, the fiber was winded to obtain carbon precursor fiber. During the coagulation process of the nascent fiber, there were filament fuzziness and breakage, and the frequency of shutdown due to filament fuzziness and breakage was 20 days/time. The diameter dispersion coefficient (Cv value) of the precursor fiber was 2.6%. The precursor fiber was characterized by small-angle X-ray scattering (SAXS), and the average radial size $L_P$ of the micropores was 3.25 nm, and the aspect ratio $L/L_P$ of the micropores was 38.

(3) Preparation of carbon fiber: The polyacrylonitrile precursor fiber prepared in (2) above was subjected to heat stabilization treatment in the range of 180-280°C through 5 air atmosphere heating furnaces, to obtain pre-oxidized fiber. The temperatures of these 5 air atmosphere heating furnaces were 181°C, 222°C, 234° C, 252 °C, and 273°C respectively. The total heating time was 62 min, and the total draft was 2.2%. The obtained pre-oxidized fiber was subjected to low-temperature carbonization and high-temperature carbonization treatment in nitrogen to obtain carbon fiber. The low-temperature carbonization temperature was 300-700°C, the heat treatment time was 3.8 min, and the draft was 2.8%; the high-temperature carbonization temperature was 1000-1500°C, the heat treatment time was 1.8 min, and the draft was -2.8%. The micropores of the obtained carbon fiber were characterized by small angle X-ray scattering (SAXS). The average radial size $L_P$ of the micropores perpendicular to the fiber axis direction was 3.19 nm, the aspect ratio $L/L_P$ of the micropore was 40, and the volume ratio of the micropores with radial size greater than 15 nm to the total micropore volume was 13.3 %. The average diameter of the carbon fiber was 5μm, the diameter dispersion coefficient (Cv value) was 6.8 %, the tensile strength was 4.16 GPa, the tensile strength Cv value was 6.5%, the tensile modulus was 239 GPa, and the tensile modulus $C_V$ value was 6.3%.

The data in the above examples and comparative examples are summarized in the following table.

| | Oxygen content in polymerization kettle | Initial stage temperature / time / Conversion rate | Middle stage temperature / time / Conversion rate | Final stage temperature / time / Conversion rate | The total number of gel particles with a particle size greater than 0.15 μm $Np$ | The proportion of gel particles with an average particle size greater than 5 μm in the total gel particles | Equilibrium swelling degree | Average radial size of micropores $L_P$ | Micropore aspect ratio $L/L_P$ | Ratio of the volume of micropores with radial size greater than 15 nm to the total micropore volume |
|---|---|---|---|---|---|---|---|---|---|---|
| Example 1 | 980ppm | 40°C / 60min / 12.1% | 80°C / 600min / 75.3% | 45°C / 120min / 3.5% | 96579 particles/mL | 0.12% | 300% | 1.65nm | 58 | 8.5% |
| Example 2 | 760ppm | 55°C / 80min / 15.1% | 65°C / 500min / 70.2% | 40°C / 200min / 1.9% | 75744 particles/mL | 0.11% | 500% | 1.76nm | 53 | 9.5% |
| Example 3 | 340ppm | 70°C / 30min / 14.1% | 50°C / 600min / 77.8% | 30°C / 150min / 1.2% | 67738 particles/mL | 0.10% | 1000% | 1.57nm | 59 | 6.3% |
| Example 4 | 600ppm | 40°C / 60min / 12.5% | 80°C / 600min / 79.6% | 45°C / 120min / 2.5% | 91456 particles/mL | 0.11% | 800% | 1.45nm | 62 | 4.5% |
| Example 5 | 500ppm | 55°C / 80min / 15.5% | 65°C / 500min / 70.6% | 40°C / 200min / 1.5% | 72324 particles/mL | 0.10% | 900% | 1.46nm | 63 | 4.6% |
| Example 6 | 100ppm | 70°C / **30min** / 14.5% | 50°C / 600min / 79.0% | 30°C / 150min / 0.5% | 60128 particles/mL | 0.08% | 2000% | 1.37nm | 66 | 4.7% |
| Example 7 | 1500ppm | 55°C / 80min / 14.2% | 65°C / 500min / 70.0% | 30°C / 200min / 1.3% | 78630 particles/mL | 0.13% | 480% | 1.83nm | 52 | 9.3% |
| Example 8 | 2500ppm | 55°C / 120min / 17.1% | 65°C / 550min / 74.6% | 45°C / 100min / 2.4% | 87339 particles/mL | 0.21% | 390% | 1.96nm | 50 | 9.5% |

(continued)

| | Oxygen content in polymerization kettle | Initial stage temperature, time, Conversion rate | Middle stage temperature, time, Conversion rate | Final stage temperature, time, Conversion rate | The total number of gel particles with a particle size greater than 0.15 μm Np | The proportion of gel particles with an average particle size greater than 5 μm in the total gel particles | Equilibrium swelling degree | Average radial size of micropores $L_P$ | Micropore aspect ratio $L/L_P$ | Ratio of the volume of micropores with radial size greater than 15 nm to the total micropore volume |
|---|---|---|---|---|---|---|---|---|---|---|
| Comparative Example 1 | 1500ppm | 30°C 30min 0.48% | 65°C 750min 85.2% | none | 112822 particles/mL | 0.65% | 180% | 3.18nm | 39 | 12.4% |
| Comparative Example 2 | 680ppm | 20°C 60min 0.16% | 80°C 720min 91.5% | none | 134925 particles/mL | 0.87% | 120% | 3.73nm | 43 | 16.3% |
| Comparative Example 3 | 340ppm | 20°C 100min 0.25% | 85°C 680min 95.5% | none | 170738 particles/mL | 1.2 % | 100% | 3.92nm | 39 | 15.5% |
| Comparative Example 4 | 2500ppm | 25°C 120min 0.5% | 80°C 660min 88.6% | 45°C 100min 0.88% | 125990 particles/mL | 0.96% | 150% | 3.65nm | 40 | 12.1% |
| Comparative Example 5 | 600ppm | 40°C 60min 12.5% | 75°C 600min 75.6% | 60°C 120min 7.5% | 121440 particles/mL | 0.85% | 200% | 2.79nm | 45 | 12.3% |
| Comparative Example 6 | 340ppm | 20°C 100min 0.25% | 85°C 550min 75.6% | 45°C 120min 3.2% | 119380 particles/mL | 0.83% | 260% | 2.56nm | 47 | 11.5% |
| Comparative Example 7 | 600ppm | 50°C 60min 14.5% | 45°C 200min 23.6% | 75°C 550min 55.2% | 123650 particles/mL | 0.89% | 190% | 3.26nm | 41 | 12.6% |

(continued)

| | Oxygen content in polymerization kettle | Initial stage temperature time Conversion rate | Middle stage temperature time Conversion rate | Final stage temperature time Conversion rate | The total number of gel particles with a particle size greater than 0.15 μm Np | The proportion of gel particles with an average particle size greater than 5 μm in the total gel particles | Equilibrium swelling degree | Average radial size of micropores Lp | Micropore aspect ratio L/Lp | Ratio of the volume of micropores with radial size greater than 15 nm to the total micropore volume |
|---|---|---|---|---|---|---|---|---|---|---|
| Comparative Example 8 | 600ppm | 40°C 60min 12.5% | 65°C 450min 56.7% | 75°C 250min 25.8% | 123920 particles / mL | 0.92% | 180% | 3.19nm | 40 | 13.3% |

**Claims**

1. A polyacrylonitrile-based carbon fiber containing micropores, **characterized in that** the average radial size $L_P$ of the micropores is less than or equal to 2.0 nm, the aspect ratio $L/L_P$ of the micropores is greater than or equal to 50 and less than or equal to 100, and the ratio of the volume of micropores with radial sizes greater than 15 nm to the total micropore volume is greater than 0 and less than 10%.

2. The polyacrylonitrile-based carbon fiber according to claim 1, **characterized in that** the average radial size $L_P$ of the micropores is less than or equal to 1.5 nm, the aspect ratio $L/L_P$ of the micropores is greater than or equal to 60 and less than or equal to 100, and the ratio of the volume of micropores with radial sizes greater than 15 nm to the total micropore volume is greater than 0 and less than 5%.

3. The polyacrylonitrile-based carbon fiber according to any one of claims 1-2, **characterized in that** the diameter Cv value of the carbon fiber is less than or equal to 3%.

4. The polyacrylonitrile-based carbon fiber according to any one of claims 1-3, **characterized in that** the number of fibers of the polyacrylonitrile-based carbon fiber is 3000 to 24000.

5. The polyacrylonitrile-based carbon fiber according to any one of claims 1-4, **characterized in that** the diameter of the polyacrylonitrile-based carbon fiber is 5-7 $\mu$m; the tensile strength is 4.9-5.8 GPa, and the tensile strength Cv value is less than 5%; and/or the tensile modulus is 282-323 GPa, and the tensile modulus Cv value is less than 5%.

6. A polyacrylonitrile spinning dope, **characterized in that** the polyacrylonitrile spinning dope contains gel particles, the total number of gel particles with a particle size greater than 0.15 $\mu$m contained in the polyacrylonitrile spinning dope is less than or equal to $1 \times 10^5$ particles/mL, and the proportion of gel particles with a particle size greater than 5 $\mu$m to the total number of gel particles is less than or equal to 0.3%; wherein the equilibrium swelling degree of the gel particles is 250~5000%.

7. The polyacrylonitrile spinning dope according to claim 6, **characterized in that** the polyacrylonitrile spinning dope comprises a polyacrylonitrile polymer and a solvent, and the weight ratio of the polyacrylonitrile polymer to the solvent is (15~30): (85~70), preferably (18~22): (82~78).

8. The polyacrylonitrile spinning dope according to claim 7, **characterized in that** the solvent is at least one selected from the group consisting of dimethyl sulfoxide, dimethylformamide, dimethylacetamide, and a mixture thereof; and/or the polyacrylonitrile polymer is a polyacrylonitrile homopolymer, a polyacrylonitrile copolymer, or a mixture thereof.

9. The polyacrylonitrile spinning dope according to any one of claims 6 to 8, **characterized in that** the zero shear viscosity of the polyacrylonitrile spinning dope is 30-200 Pa·s, preferably 50-150 Pa·s, wherein the viscosity test temperature is 50°C.

10. A process for preparing a polyacrylonitrile spinning dope, preferably the polyacrylonitrile spinning dope according to any one of claims 6 to 9, comprising solution polymerization, wherein the solution polymerization adopts three-stage temperature control, wherein the temperature of the first initial initiation stage is $T_1$ °C, the temperature of the second constant temperature polymerization stage is $T_2$ °C, and the temperature of the third cooling polymerization stage is $T_3$ °C; wherein $T_1$, $T_2$, and $T_3$ satisfy the following relationships:

$$T_1 = (0.5\text{~}1.4){*}T_2 \text{ and } 35 \leq T_1 \leq 80;$$

and

$$T_3 = T_2 - (5\text{~}50) \text{ and } 50 \geq T_3 \geq 25.$$

11. The process for preparing polyacrylonitrile spinning dope according to claim 10, **characterized in that** $35°C \leq T_1 \leq 80°C$, preferably $40°C \leq T_1 \leq 70°C$;

$40°C \leq T_2 \leq 90°C$, preferably $50°C \leq T_2 \leq 80°C$; and

25°C≤$T_3$≤50°C, preferably 25°C≤$T_3$≤45°C, more preferably 30°C≤$T_3$≤45°C.

12. The process for preparing polyacrylonitrile spinning dope according to claim 10 or 11, **characterized in that** 50°C ≤$T_2$ ≤ 80°C, 40°C ≤ $T_1$ ≤ 70°C, and 30°C ≤ $T_3$ ≤ 45°C; and/or

$T_3$ =$T_2$ -(15~50), preferably $T_3$ =$T_2$ -(15~40), more preferably $T_3$ =$T_2$-(20~35).

13. The process for preparing a polyacrylonitrile spinning dope according to any one of claims 10 to 12, **characterized in that** the polymerization time of the first initial initiation stage is 20-150 minutes, preferably 30-120 minutes, and more preferably 30-80 minutes; the polymerization time of the second constant temperature polymerization stage is 300-900 minutes, preferably 400-800 minutes, preferably 400-700 minutes, and more preferably 500-600 minutes; and the polymerization time of the third cooling polymerization stage is 80-300 minutes, preferably 80-250 minutes, preferably 100-250 minutes, and more preferably 120-200 minutes ; and/or
the monomer conversion rate of the second constant temperature polymerization stage is X, the monomer conversion rate of the first initial initiation stage is (0.125~0.215)*X, and the monomer conversion rate of the third cooling polymerization stage is (0.007~0.0715)*X , wherein the monomer conversion rate X of the second constant temperature polymerization stage is 60%-85% , preferably 65%-85% , more preferably 70%-80% or 70%-79% .

14. The process for preparing polyacrylonitrile spinning dope according to any one of claims 10 to 13, **characterized in that** the solution polymerization is protected by an inert gas; preferably, the solution polymerization is protected by an inert gas and the oxygen content is less than 1000 ppm; and/or
the solution polymerization is carried out in a polymerization kettle.

15. A process for preparing a polyacrylonitrile-based carbon fiber according to any one of claims 1 to 5, comprising the steps of preparing a polyacrylonitrile spinning dope into a precursor fiber, and pre-oxidizing and carbonizing the precursor fiber to obtain the polyacrylonitrile-based carbon fiber; wherein the polyacrylonitrile spinning dope is the polyacrylonitrile spinning dope according to any one of claims 6 to 9 or the polyacrylonitrile spinning dope prepared by the preparation process according to any one of claims 10 to 14 .

16. The process for preparing polyacrylonitrile-based carbon fiber according to claim 15, **characterized in that** the precursor fiber preparation steps include: (1) coagulation of nascent fibers, (2) hot water drawing, (3) hot water washing, (3) oiling, (4) drying and densification, (5) steam drawing, (6) heat setting and (7) winding.

17. The process for preparing polyacrylonitrile-based carbon fiber according to claim 15, **characterized in that** the pre-oxidation temperature is 180~300°C, preferably divided into 4~6 temperature zones; and/or the carbonization includes low-temperature carbonization and high-temperature carbonization, preferably, the low-temperature carbonization temperature is 300~700°C, and the high-temperature carbonization temperature is 1000~1500°C.

18. The process for preparing polyacrylonitrile-based carbon fiber according to claim 15, **characterized in that** the preparation process also includes the steps of surface treatment and sizing.

**INTERNATIONAL SEARCH REPORT**

| International application No. |
| --- |
| **PCT/CN2023/142998** |

| A. | CLASSIFICATION OF SUBJECT MATTER |
| --- | --- |

D01F9/22(2006.01)i; D01F6/38(2006.01)i; D01D1/02(2006.01)i; D01D5/06(2006.01)i; C08F220/44(2006.01)i

According to International Patent Classification (IPC) or to both national classification and IPC

| B. | FIELDS SEARCHED |
| --- | --- |

Minimum documentation searched (classification system followed by classification symbols)

IPC:D01F,D01D

Documentation searched other than minimum documentation to the extent that such documents are included in the fields searched

Electronic data base consulted during the international search (name of data base and, where practicable, search terms used)

CNTXT, ENTXTC, CNKI, CNABS, VEN, WEB OF SCIENCE: 腈纶, PAN, 聚丙烯腈, 丙烯腈, 单体转化率, 聚合, 凝胶, 凝胶粒子, 凝胶颗粒, 溶胀度, 平衡溶胀度, 碳纤维, 微孔, 孔, 温度, 细孔, 长径比, 三段, POLYACYLONITRILE, ACRYLONITRILE, PORE, HOLE, MICROPOROUS, CARBON, FIBRE, FIBER, FILAMENT, SIZE, DIMENSION, ASPECT, RATIO, DIAMETER, GEL, GELATUM, EQUILIBRIUM, SWELL

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 113337905 A (BEIJING UNIVERSITY OF CHEMICAL TECHNOLOGY) 03 September 2021 (2021-09-03)<br>description, paragraphs 0004-0018, and embodiment 8 | 1-18 |
| A | CN 102040706 A (KINGFA SCIENCE & TECHNOLOGY CO., LTD. et al.) 04 May 2011 (2011-05-04)<br>entire document | 1-18 |
| A | CN 107556431 A (ZHONG AN XIN TECHNOLOGY CO., LTD. et al.) 09 January 2018 (2018-01-09)<br>entire document | 1-18 |
| A | CN 111733473 A (INSTITUTE OF COAL CHEMISTRY, CHINESE ACADEMY OF SCIENCES) 02 October 2020 (2020-10-02)<br>entire document | 1-18 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 March 2024** | **08 April 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 700 163 A1**

**INTERNATIONAL SEARCH REPORT**

| International application No. |
| PCT/CN2023/142998 |

**C.     DOCUMENTS CONSIDERED TO BE RELEVANT**

| Category* | Citation of document, with indication, where appropriate, of the relevant passages | Relevant to claim No. |
|---|---|---|
| A | CN 112142888 A (INSTITUTE OF COAL CHEMISTRY, CHINESE ACADEMY OF SCIENCES) 29 December 2020 (2020-12-29)<br>    entire document | 1-18 |
| A | CN 114457449 A (CHINA PETROLEUM & CHEMICAL CORP. et al.) 10 May 2022 (2022-05-10)<br>    entire document | 1-18 |
| A | KR 20110078249 A (HYOSUNG CORP.) 07 July 2011 (2011-07-07)<br>    entire document | 1-18 |
| A | 敖玮 (AO, Wei). "PAN纤维微观结构与其性能相关性的研究 (Corresponding Relation between Scatter Intensity and Angle of PAN Fiber)"<br>化工新型材料 (New Chemical Materials), Vol. 44, No. 07, 15 July 2016 (2016-07-15), 155-157<br>ISSN: 1006-3536,<br>    entire document | 1-18 |

Form PCT/ISA/210 (second sheet) (July 2022)

**INTERNATIONAL SEARCH REPORT**
Information on patent family members

| International application No. |
| --- |
| **PCT/CN2023/142998** |

| Patent document cited in search report | | | Publication date (day/month/year) | Patent family member(s) | | | Publication date (day/month/year) |
| --- | --- | --- | --- | --- | --- | --- | --- |
| CN | 113337905 | A | 03 September 2021 | None | | | |
| CN | 102040706 | A | 04 May 2011 | CN | 102040706 | B | 14 November 2012 |
| CN | 107556431 | A | 09 January 2018 | CN | 107556431 | B | 09 November 2018 |
| CN | 111733473 | A | 02 October 2020 | CN | 111733473 | B | 28 May 2021 |
| CN | 112142888 | A | 29 December 2020 | CN | 112142888 | B | 17 August 2021 |
| CN | 114457449 | A | 10 May 2022 | CN | 114457449 | B | 10 November 2020 |
| KR | 20110078249 | A | 07 July 2011 | KR | 101490529 | B1 | 05 February 2015 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017128838 A
- JP 2018141251 A
- WO 2019012999 A1
- JP 2019112730 A
- CN 110832127 A
- JP 2008248219 A
- JP 4924484 B
- JP 5141598 B
- CN 1417393 A
- GB 33642008 T
- GB 33622005 T
- GB 14462005 T

### Non-patent literature cited in the description

- **BRIAN R. PAUW et al.** *J. Appl. Cryst.*, 2010, vol. 43, 837-849